# NEW EUROPEAN PATENT SPECIFICATION

(11) **EP 1 159 662 B2**
(45) Date of publication and mention of the opposition decision: **06.10.2010**
(45) Mention of the grant of the patent: 14.01.2004
(21) Application number: 00912743.2
(22) Date of filing: 03.03.2000
(51) Int. Cl.: G06F 1/00

(54) **SMARTCARD USER INTERFACE FOR TRUSTED COMPUTING PLATFORM**
CHIPKARTEN-BENUTZERSCHNITTSTELLE FÜR EINE VERTRAUTE COMPUTERPLATTFORM
INTERFACE D'UTILISATEUR DE CARTE INTELLIGENTE POUR PLATE-FORME DE CALCUL SECURISEE

(30) Priority: 05.03.1999 GB 9905056; 15.12.1999 GB 9929697
(43) Date of publication of application: 05.12.2001
(73) Proprietor: Hewlett-Packard Company, Palo Alto, CA 94304-1112 (US)
(72) Inventor: BALACHEFF, Boris, St. Michael's Hill, Bristol BS2 8DG (GB); CHAN, David, Monte Sereno, CA 95030 (US)
(74) Representative: Stöckeler, Ferdinand
(86) International application number: PCT/GB2000/000752
(87) International publication number: WO 2000/054126

(56) References cited:
- WO-A-95/24696
- GB-A- 2 317 983
- FERREIRA R: "THE PRACTICAL APPLICATION OF STATE OF THE ART SECURITY IN REAL ENVIRONMENTS" PROCEEDINGS OF THE INTERNATIONAL CONFERENCE ON CRYPTOLOGY - AUSCRYPT,DE,BERLIN, SPRINGER, vol. CONF. 1, 1990, pages 334-355, XP000145211 ISBN: 3-540-53000-2
- VERSCHUREN T: "Smart access: strong authentication on the Web" COMPUTER NETWORKS AND ISDN SYSTEMS,NL,NORTH HOLLAND PUBLISHING. AMSTERDAM, vol. 30, no. 16-18, 30 September 1998 (1998-09-30), pages 1511-1519, XP004138682 ISSN: 0169-7552

## Description

### Field of the Invention

The present invention relates to the field of computers, and particularly to a computing entity which can be placed into a trusted state, and a method of operating the computing entity such that a user of the entity is confident that the computing entity is in the trusted state.

### Background to the Invention

Conventional prior art mass market computing platforms include the well-known personal computer (PC) and competing products such as the Apple Macintosh™, and a proliferation of known palm-top and laptop personal computers. Generally, markets for such machines fall into two categories, these being domestic or consumer, and corporate. A general requirement for a computing platform for domestic or consumer use is a relatively high processing power, Internet access features, and multi-media features for handling computer games. For this type of computing platform, the Microsoft Windows® '95 and '98 operating system products and Intel processors dominate the market.

On the other hand, for business use in many applications, a server platform provides centralized data storage, and application functionality for a plurality of client stations. For business use, key criteria are reliability, networking features, and security features. For such platforms, the Microsoft Windows NT 4.0™ operating system is common, as well as the Unix™ operating system.

With the increase in commercial activity transacted over the Internet, known as "e-commerce", there has been much interest in the prior art in enabling data transactions between computing platforms over the Internet of both domestic and commercial types. A fundamental issue in acceptance of such systems is the one of trust between interacting computer platforms for the making of such transactions.

There have been several prior art schemes which are aimed at increasing the security and trustworthiness of computer platforms. Predominantly, these rely upon adding in security features at the application level, that is to say the security features are not inherently embedded in the kernel of operating systems, and are not built in to the fundamental hardware components of the computing platform. Portable computer devices have already appeared on the market which include a smartcard, which contains data specific to a user, which is input into a smartcard reader on the computer. Presently, such smartcards are at the level of being add-on extras to conventional personal computers, and in some cases are integrated into a casing of a known computer. Although these prior art schemes go some way to improving the security of computer platforms, the levels of security and trustworthiness gained by prior art schemes may be considered insufficient to enable widespread application of automated transactions between computer platforms. For businesses to expose significant value transactions to electronic commerce on a widespread scale, they require confidence in the trustworthiness of the underlying technology.

Prior art computing platforms have several problems which stand in the way of increasing their inherent security:
- The operating status of a computer platform and the status of the data within the platform is dynamic and difficult to predict. It is difficult to determine whether a computer platform is operating correctly because the state of the computer platform and data on the platform is constantly changing and the computer platform itself may be dynamically changing.
- From a security point of view, commercial computer platforms, in particular client platforms, are often deployed in environments which are vulnerable to unauthorized modification. The main areas of vulnerability include modification by software loaded by a user, or via a network connection. Particularly, but not exclusively, conventional computer platforms may be vulnerable to attack by virus programs, with varying degrees of hostility.
- Computer platforms may be upgraded or their capabilities may be extended or restricted by physical modification, i.e. addition or deletion of components such as hard disk drives, peripheral drivers and the like.

It is known to provide security features for computer systems, which are embedded in operating software. These security features are primarily aimed at providing division of information within a community of users of a local system. In the known Microsoft Windows NT™ 4.0 operating system, there exists a monitoring facility called a "system log event viewer" in which a log of events occurring within the platform is recorded into an event log data file which can be inspected by a system administrator using the windows NT operating system software. This facility goes some way to enabling a system administrator to security monitor pre-selected events. The event logging function in the Windows NT™ 4.0 operating system provides system monitoring.

In terms of overall security of a computer platform, a purely software based system is vulnerable to attack, for example by viruses of which there are thousands of different varieties. Several proprietary virus finding and correcting applications are known, for example the Dr Solomons ™ virus toolkit program or Norton ™ anti-virus kit. The Microsoft Windows NT™ 4.0 software includes a virus guard software, which is preset to look for known viruses. However, virus strains are developing continuously, and the virus guard software will not give reliable protection against newer unknown viruses. New strains of virus are being developed and released into the computing and internet environment on an ongoing basis.

Prior art monitoring systems for computer entities focus on network monitoring functions, where an administrator uses network management software to monitor performance of a plurality of networked computers. In these known systems, trust in the system does not reside at the level of individual trust of each hardware unit of each computer platform in a system, but relies on a network administrator monitoring each computer in the network. Prior art systems cannot verify operation of remote computers running different operating systems on different networks, for example as accessed over the internet.

In known systems there is difficulty in establishing trust between a user of a computing platform and the computing platform.

A general discussion of security in online banking networks is provided in Ferreira R: "The Practical Application of State of the Art Security in Real Environments", Proceedings of the International Conference on Cryptology-Auscrypt, DE, Berlin, Springer vol. Conf. 1, 1990, pp 334-355, XP000145211 ISBN: 3-540- 53000-2. Ferreira describes the use of a security server in connection with a user smart card.

### Summary of the Invention

One object of the present invention is to provide a computing entity in which a user can have a high degree of confidence that the computing entity has not been corrupted by an external influence, and is operating in a predictable and known manner.

Another object of the present invention is to simplify a task of a user of a computing entity judging whether the trustworthiness of the computing entity is sufficient to perform a particular task or set of tasks or type of task required by the user.

In the specific embodiments, the user is provided with a trusted token device which is portable and separable from a computer entity. The token device is trusted by the user to verify that a computer entity which the user wishes to use is trustworthy. In the general case, the token device is not restricted to verifying the trustworthiness of one particular computer entity, but is generic to operate with any one or more of a plurality of computer entities.

According to a first aspect of the present invention there is provided a system of computing apparatus comprising: a computing platform having a first data processor and a first data storage means ; and a token device being physically distinct and separable from said computing platform,
characterised by said system further comprising a monitoring component having a second data processor and a second data storage means, wherein said monitoring component is configured to perform a plurality of data checks on said computing platform and wherein the token device is also physically distinct and separable from said monitoring component; and wherein in one mode of operation, said token device operates to make an integrity challenge to said monitoring component and said token device will not undertake specific actions of which it is capable unless it receives a satisfactory response to said integrity challenge.

Said token device may receive a detailed response to said integrity challenge, and process said integrity response to interpret said integrity response.

The system may further comprise a third party server, wherein a response to said integrity challenge is sent to said third party server. Said monitoring component may send a detailed integrity response to said third party server if requested in the integrity challenge by said token device. Said monitoring component may report a detailed integrity response to said token device, and said token device may send said integrity response to said third party server, if it requires the third party server to help interpret said detailed integrity response. Said third party server may simplify said integrity response to a form in which said token device can interpret said integrity response. Said third party server may send said simplified integrity response to said token device. The system may further operate the steps of adding a digital signature data to said simplified integrity response, said digital signature data authenticating said third party server to said token device.

Said token device may be requested to take an action. Alternatively, said token device may request to take an action.

In one mode of operation, the token device may send image data to said computer platform if a said satisfactory response to said integrity challenge is received, and said computer platform may display said image data.

Preferably said monitoring component is capable of establishing an identity of itself. Preferably the system further comprises an interface means for interfacing between said monitoring component and said token device. Preferably said computing entity is configured such that said monitoring component reports said data checks to said token device, said data checks containing data describing a status of said computer platform.

A said specific action may comprise authorising said computing platform to undertake a transaction on behalf of a user of said system.

Interface means for communicating between the computing platform and the token device may be provided, said interface means communicating with said monitoring component, wherein said computing entity is configured such that said monitoring component reports said data checks to said token device, said data checks containing data describing a status of said computer platform.

Preferably on communication between said token device and said interface means, said monitoring component is activated to perform a monitoring operation on said computer platform, in which said monitoring component obtains data describing an operating status of said computer platform.

Said interface means is resident substantially wholly within said monitoring component in a preferred implementation. In an alternative implementation, said interface means may comprise said computer platform. Said interface means preferably comprises a PCSC stack in accordance with PCSC Workgroup PC/SC Specification 1.0.

Said monitoring component may comprise a verification means configured to obtain a certification data independently certifying said status data, and to provide said certification data to said interface means. Said interface means may be configured to send and receive data according to a pro-active protocol.

According to a second aspect of the present invention there is provided a method as set out in claim 29.

Said monitoring operation may comprise the steps of: said monitoring component carrying out one or a plurality of data checks on components of said computing platform; said monitoring component being able to report a set of certified reference data together with said data checks.

Said certified reference data may include a set of metrics to be expected when measuring particular components of said computing platform, and may include digital signature data identifying an entity that certifies said reference data.

Preferably said step of reporting verification of said monitoring operation comprises sending a confirmation signal to a token device said confirmation signal describing a result of said monitoring operation. Preferably said integrity data is transmitted by said interface to a token device external of said computing entity.

A result of said monitoring operation may be reported by generating a visual display of confirmation data.

The method may further comprise the steps of: adding a digital signature data to said integrity data, said digital signature data identifying said monitoring component; transmitting said integrity data and said digital signature data from said interface.

The method may further involve a third party server, and may comprise a response to an integrity challenge being sent to said third party server. Said monitoring component may send a detailed integrity response to said third party server if requested in the integrity challenge by said token device. The said monitoring component may report a detailed integrity response to said token device, and said token device may send said integrity response to said third party server, if it requires the third party server to help interpret said detailed integrity response. Said third party server may simplify said integrity response to a form in which said token device can interpret said integrity response. Said third party server may send said simplified integrity response to said token device.

The method may further operate the step of adding a digital signature data to said simplified integrity response, said digital signature data authenticating said third party server to said token device.

Said token device may be requested to take an action. Alternatively, said token device may request to take an action.

In embodiments, there may be provided a method of checking an integrity of operation of a computing entity, said computing entity comprising a computer platform having a first processor means and first data storage means, and a monitoring component comprising a second processor and second memory means, by means of a token device, said token device comprising a third data processor and a third memory means, said method comprising the steps of: programming said token device to respond to a received poll signal from an application program, said poll signal received from said computer platform; said token device receiving a poll signal from said computer platform; in response to said received poll signal, said token device generating a signal for requesting integrity data by said monitoring component; and said monitoring component recently integrity data of said computer platform in response to said received signal from said token device.

According to a third aspect of the present invention there is provided a token device comprising a data processor and a memory device, said token device configured to allow performance of at least one data processing or signaling function:
characterised in that said token device operates to: receive a request to perform said at least one data processing or signaling function from an element of a computing system; generate a request for integrity data from a monitoring component in said computing system to confirm the integrity of the computing system; receive the integrity data from the monitoring component; if said integrity data supplied to said token device is satisfactory, then said token device allows a said function; and if said integrity data received by said token device is unsatisfactory, then said token device denies said function.

Said token device may further comprise a data processor. Said token device may be configured to be responsive to a poll signal operating in accordance with PC/SC specification 1.0. Said token device may be capable of initiating a command to be handled by a software stack on the computer entity in response to said poll signal according to a proactive protocol.

Embodiments of the invention show a method of verifying a status of a computing entity, by means of a token device provided external of said computing entity, said method comprising the steps of: said token device receiving a poll signal; said token device responding to said poll signal by providing a request for obtaining verification of a state of said computer entity; and said token device receiving a result message, said result message describing the result of said verification.

The method may further comprise sending a response to said integrity challenge to said third party server. Said monitoring component may send a detailed integrity response to said third party server if requested in the integrity challenge by said token device. Said monitoring component may report a detailed integrity response to said token device, and said token device may send said integrity response to said third party server, if it requires the third party server to help interpret said detailed integrity response. Said third party server may simplify said integrity response to a form in which said token device can interpret said integrity response. Said third party server may send said simplified integrity response to said token device.
- The system may further operate the step of adding a digital signature data to said simplified integrity response, said digital signature data authenticating said third party server to said token device.

Said token device may be requested to take an action. Alternatively, said token device may request to take an action.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 is a diagram that illustrates a system capable of implementing embodiments of the present invention;
Figure 2 is a diagram which illustrates a motherboard including a trusted device arranged to communicate with a smart card via a smart card reader and with a group of modules;
Figure 3 is a diagram that illustrates the trusted device in more detail;
Figure 4 is a flow diagram which illustrates the steps involved in acquiring an integrity metric of the computing apparatus;
Figure 5 is a flow diagram which illustrates the steps involved in establishing communications between a trusted computing platform and a remote platform including the trusted platform verifying its integrity;
Figure 6 is a diagram that illustrates the operational parts of a user smart card for use in accordance with embodiments of the present invention;
Figure 7 is a flow diagram which illustrates the process of mutually authenticating a smart card and a host platform;
Fig. 8 illustrates schematically a set of process steps carried out by a smart card and computing entity according to a first use model;
Fig. 9 illustrates schematically a second mode of operation of the computing entity and smart card in which an application requests authorization from the smart card;

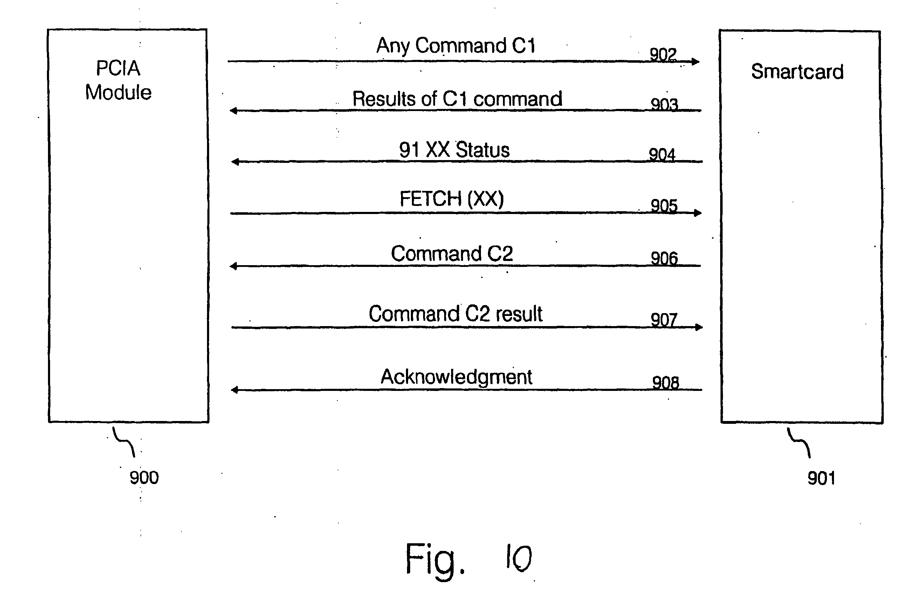

Fig. 10 illustrates schematically communication between the smart card and an interface module comprising the computing entity;
Fig. 11 illustrates schematically a computing system comprising a computing entity, a token device, and a remote trusted server, in which the token device delegates computation of encrypted integrity metrics to the trusted server in order to verify information received from a trusted component within a computing entity;
Fig. 12 illustrates schematically a mode of operation of the system of Fig. 11 in which integrity metric data is sent from a trusted component to a token device and the token device then sends the data to a trusted server for data processing according to a third mode of operation;
Fig. 13 illustrates schematically a further specific embodiment implementation of a system according to the present invention in which conventional PCSC technology is used to communicate with a smartcard, and in which the smartcard is able to give authorization for a transaction to a prior art application program, which operates through a subsystem interface to a trusted component; and
Fig. 14 illustrates schematically operation of the embodiment shown in Fig. 15 enabling a smartcard to allow authorization for a transaction after having received confirmation of a trustworthy state of a computer entity with which it is co-operating.

### Detaited Description of the Best Mode for Carrying Out the Invention

There will now be described by way of example a best mode contemplated by the inventors for carrying out the invention, together with alternative embodiments. In the following description numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

Specific implementations of the present invention comprise a computer platform having a processing means and a memory means, and a monitoring component which is physically associated with the computer platform, and known herein after as a "trusted component" (or "trusted device") which monitors operation of the computer platform by collecting metrics data from the computer platform, and which is capable of verifying to other entities interacting with the computer platform, the correct functioning of the computer platform. A token device which may be personal to a human user of computer platform interacts with a trusted component associated with the computer platform to verify to the human user the trustworthiness of the computer platform.

A user of a computing entity established a level of trust with the computer entity by use of such a trusted token device. The trusted token device is a personal and portable device having a data processing capability and in which the user has a high level of confidence. The trusted token device may perform the functions of:
- verifying a correct operation of a computing platform in a manner which is readily apparent to the user, for example by audio or visual display;
- challenging a monitoring component to provide evidence of a correct operation of a computer platform with which the monitoring component is associated; and
- establishing a level of interaction of the token device with a computing platform, depending on whether a monitoring component has provided satisfactory evidence of a correct operation of the computing entity, and withholding specific interactions with the computer entity if such evidence of correct operation is not received by the token device.

The token device may be requested to take an action, for example by an application resident on the computing platform, or by remote application, or alternatively the token device may initiate an action itself.

In this specification, the term "trusted" when used in relation to a physical or logical component, is used to mean that the physical or logical component always behaves in an expected manner. The behavior of that component is predictable and known. Trusted components have a high degree of resistance to unauthorized modification.

In this specification, the term 'computer entity' is used to describe a computer platform and a monitoring component.

In this specification, the term "computer platform" is used to refer to at least one data processor and at least one data storage means, usually but not essentially with associated communications facilities e.g. a plurality of drivers, associated applications and data files, and which may be capable of interacting with external entities e.g. a user or another computer platform, for example by means of connection to the internet, connection to an external network, or by having an input port capable of receiving data stored on a data storage medium, e.g. a CD ROM, floppy disk, ribbon tape or the like. The term "computer platform" encompasses the main data processing and storage facility of a computer entity.

By use of a trusted component in each computing entity, there is enabled a level of trust between different computing platforms. It is possible to query such a platform about its state, and to compare it to a trusted state, either remotely, or through a monitor on the computer entity. The information gathered by such a query is provided by the computing entity's trusted component which monitors the various parameters of the platform. Information provided by the trusted component can be authenticated by cryptographic authentication, and can be trusted.

The presence of the trusted component makes it possible for a piece of third party software, either remote or local to the computing entity to communicate with the computing entity in order to obtain proof of its authenticity and identity and to retrieve measured integrity metrics of that computing entity. The third party software can then compare the metrics obtained from the trusted component against expected metrics in order to determine whether a state of the queried computing entity is appropriate for the interactions which the third party software item seeks to make with the computing entity, for example commercial transaction processes.

This type of integrity verification between computing entities works well in the context of third party software communicating with a computing entity's trusted component, but does not provide a means for a human user to gain a level of trustworthy interaction with his or her computing entity, or any other computing entity which that person may interact with by means of a user interface.

In a preferred implementation described herein, a trusted token device is used by a user to interrogate a computing entity's trusted component and to report to the user on the state of the computing entity, as verified by the trusted component.

A "trusted platform" used in preferred embodiments of the invention will now be described. This is achieved by the incorporation into a computing platform of a physical trusted device whose function is to bind the identity of the platform to reliably measured data that provides an integrity metric of the platform. The identity and the integrity metric are compared with expected values provided by a trusted party (TP) that is prepared to vouch for the trustworthiness of the platform. If there is a match, the implication is that at least part of the platform is operating correctly, depending on the scope of the integrity metric.

A user verifies the correct operation of the platform before exchanging other data with the platform. A user does this by requesting the trusted device to provide its identity and an integrity metric. (Optionally the trusted device will refuse to provide evidence of identity if it itself was unable to verify correct operation of the platform.) The user receives the proof of identity and the identity metric, and compares them against values which it believes to be true. Those proper values are provided by the TP or another entity that is trusted by the user. If data reported by the trusted device is the same as that provided by the TP, the user trusts the platform. This is because the user trusts the entity. The entity trusts the platform because it has previously validated the identity and determined the proper integrity metric of the platform.

Once a user has established trusted operation of the platform, he exchanges other data with the platform. For a local user, the exchange might be by interacting with some software application running on the platform. For a remote user, the exchange might involve a secure transaction. In either case, the data exchanged is 'signed' by the trusted device. The user can then have greater confidence that data is being exchanged with a platform whose behaviour can be trusted.

The trusted device uses cryptographic processes but does not necessarily provide an external interface to those cryptographic processes. Also, a most desirable implementation would be to make the trusted device tamperproof, to protect secrets by making them inaccessible to other platform functions and provide an environment that is substantially immune to unauthorised modification. Since tamper-proofing is impossible, the best approximation is a trusted device that is tamper-resistant, or tamper-detecting. The trusted device, therefore, preferably consists of one physical component that is tamper-resistant.

Techniques relevant to tamper-resistance are well known to those skilled in the art of security. These techniques include methods for resisting tampering (such as appropriate encapsulation of the trusted device), methods for detecting tampering (such as detection of out of specification voltages, X-rays, or loss of physical integrity in the trusted device casing), and methods for eliminating data when tampering is detected. Further discussion of appropriate techniques can be found at http://www.cl.cam.ac.uk/∼mgk25/tamper.html. It will be appreciated that, although tamper-proofing is a most desirable feature of the present invention, it does not enter into the normal operation of the invention and, as such, is beyond the scope of the present invention and will not be described in any detail herein.

The trusted device is preferably a physical one because it must be difficult to forge. It is most preferably tamper-resistant because it must be hard to counterfeit. It typically has an engine capable of using cryptographic processes because it is required to prove identity, both locally and at a distance, and it contains at least one method of measuring some integrity metric of the platform with which it is associated.

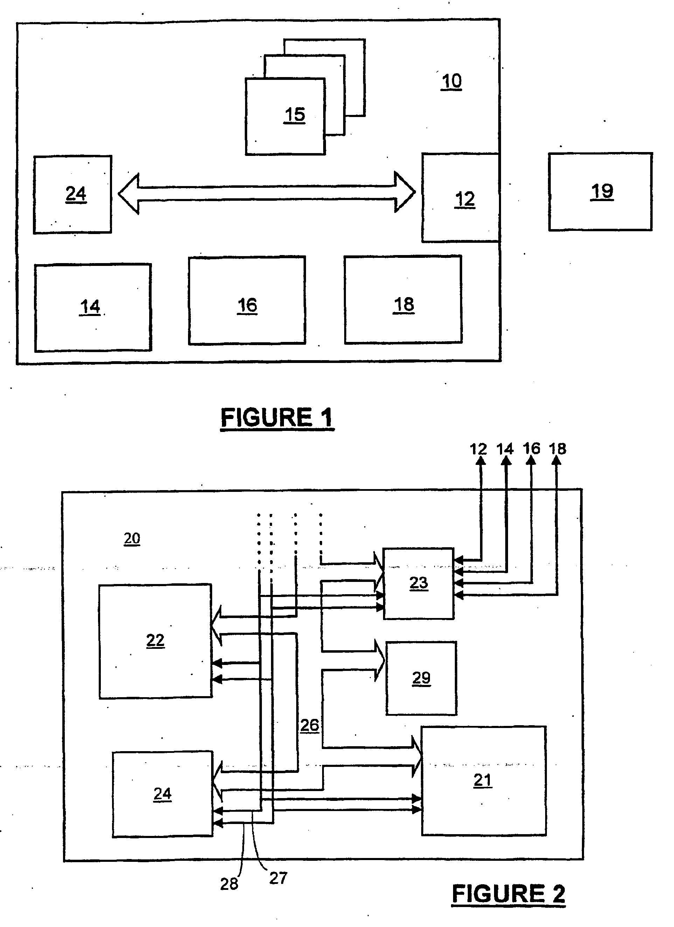

A trusted platform 10 is illustrated in the diagram in Figure 1. The platform 10 includes the standard features of a keyboard 14 (which provides a user's confirmation key), mouse 16 and monitor 18, which provide the physical 'user interface' of the platform. This embodiment of a trusted platform also contains a smart card reader 12. Along side the smart card reader 12, there is illustrated a smart card 19 to allow trusted user interaction with the trusted platform as shall be described further below. In the platform 10, there are a plurality of modules 15: these are other functional elements of the trusted platform of essentially any kind appropriate to that platform.. The functional significance of such elements is not relevant to the present invention and will not be discussed further herein. Additional components of the trusted computer entity will typically include one or more local area network (LAN) ports, one or more modem ports, and one or more power supplies, cooling fans and the like.

As illustrated in Figure 2, the motherboard 20 of the trusted computing platform 10 includes (among other standard components) a main processor 21, main memory 22, a trusted device 24, a data bus 26 and respective control lines 27 and lines 28, BIOS memory 29 containing the BIOS program for the platform 10 and an Input/Output (IO) device 23, which controls interaction between the components of the motherboard and the smart card reader 12, the keyboard 14, the mouse 16 and the monitor 18 (and any additional peripheral devices such as a modem, printer, scanner or the like). The main memory 22 is typically random access memory (RAM). In operation, the platform 10 loads the operating system, for example Windows NT™, into RAM from hard disk (not shown). Additionally, in operation, the platform 10 loads the processes or applications that may be executed by the platform 10 into RAM from hard disk (not shown).

The computer entity can be considered to have a logical, as well as a physical, architecture. The logical architecture has a same basic division between the computer platform, and the trusted component, as is present with the physical architecture described in Figs. 1 to 4 herein. That is to say, the trusted component is logically distinct from the computer platform to which it is physically related. The computer entity comprises a user space being a logical space which is physically resident on the computer platform (the first processor and first data storage means) and a trusted component space being a logical space which is physically resident on the trusted component. In the user space are one or a plurality of drivers, one or a plurality of applications programs, a file storage area; smart card reader; smart card interface; and a software agent which can perform operations in the user space and report back to trusted component. The trusted component space is a logical area based upon and physically resident in the trusted component, supported by the second data processor and second memory area of the trusted component. Monitor 18 receives images directly from the trusted component space. External to the computer entity are external communications networks e.g. the Internet, and various local area networks, wide area networks which are connected to the user space via the drivers (which may include one or more modem ports). An external user smart card inputs into smart card reader in the user space.

Typically, in a personal computer the BIOS program is located in a special reserved memory area, the upper 64K of the first megabyte do the system memory (addresses FØØØh to FFFFh), and the main processor is arranged to look at this memory location first, in accordance with an industry wide standard.

The significant difference between the platform and a conventional platform is that, after reset, the main processor is initially controlled by the trusted device, which then hands control over to the platform-specific BIOS program, which in turn initialises all input/output devices as normal. After the BIOS program has executed, control is handed over as normal by the BIOS program to an operating system program, such as Windows NT (TM), which is typically loaded into main memory 22 from a hard disk drive (not shown).

Clearly, this change from the normal procedure requires a modification to the implementation of the industry standard, whereby the main processor 21 is directed to address the trusted device 24 to receive its first instructions. This change may be made simply by hard-coding a different address into the main processor 21. Alternatively, the trusted device 24 may be assigned the standard BIOS program address, in which case there is no need to modify the main processor configuration.

It is highly desirable for the BIOS boot block to be contained within the trusted device 24. This prevents subversion of the obtaining of the integrity metric (which could otherwise occur if rogue software processes are present) and prevents rogue software processes creating a situation in which the BIOS (even if correct) fails to build the proper environment for the operating system.

Although, in the preferred embodiment to be described, the trusted device 24 is a single, discrete component, it is envisaged that the functions of the trusted device 24 may alternatively be split into multiple devices on the motherboard, or even integrated into one or more of the existing standard devices of the platform. For example, it is feasible to integrate one or more of the functions of the trusted device into the main processor itself, provided that the functions and their communications cannot be subverted. This, however, would probably require separate leads on the processor for sole use by the trusted functions. Additionally or alternatively, although in the present embodiment the trusted device is a hardware device that is adapted for integration into the motherboard 20, it is anticipated that a trusted device may be implemented as a 'removable' device, such as a dongle, which could be attached to a platform when required. Whether the trusted device is integrated or removable is a matter of design choice. However, where the trusted device is separable, a mechanism for providing a logical binding between the trusted device and the platform should be present.

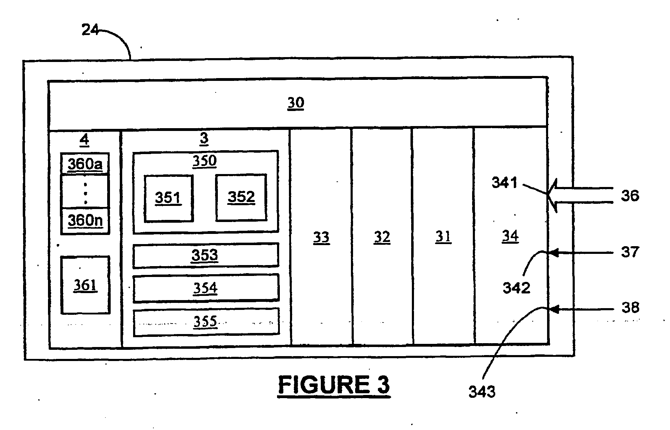

The trusted device 24 comprises a number of blocks, as illustrated in Figure 3. After system reset, the trusted device 24 performs a secure boot process to ensure that the operating system of the platform 10 (including the system clock and the display on the monitor) is running properly and in a secure manner. During the secure boot process, the trusted device 24 acquires an integrity metric of the computing platform 10. The trusted device 24 can also perform secure data transfer and, for example, authentication between it and a smart card via encryption/decryption and signature/verification. The trusted device 24 can also securely enforce various security control policies, such as locking of the user interface.

Specifically, the trusted device comprises: a controller 30 programmed to control the overall operation of the trusted device 24, and interact with the other functions on the trusted device 24 and with the other devices on the motherboard 20; a measurement function 31 for acquiring the integrity metric from the platform 10; a cryptographic function 32 for signing, encrypting or decrypting specified data; an authentication function 33 for authenticating a smart card; and interface circuitry 34 having appropriate ports (36, 37 & 38) for connecting the trusted device 24 respectively to the data bus 26, control lines 27 and address lines 28 of the motherboard 20. Each of the blocks in the trusted device 24 has access (typically via the controller 30) to appropriate volatile memory areas 4 and/or non-volatile memory areas 3 of the trusted device 24. Additionally, the trusted device 24 is designed, in a known manner, to be tamper resistant.

For reasons of performance, the trusted device 24 may be implemented as an application specific integrated circuit (ASIC). However, for flexibility, the trusted device 24 is preferably an appropriately programmed micro-controller. Both ASICs and micro-controllers are well known in the art of microelectronics and will not be considered herein in any further detail.

One item of data stored in the non-volatile memory 3 of the trusted device 24 is a certificate 350. The certificate 350 contains at least a public key 351 of the trusted device 24 and an authenticated value 352 of the platform integrity metric measured by a trusted party (TP). The certificate 350 is signed by the TP using the TP's private key prior to it being stored in the trusted device 24. In later communications sessions, a user of the platform 10 can verify the integrity of the platform 10 by comparing the acquired integrity metric with the authentic integrity metric 352. If there is a match, the user can be confident that the platform 10 has not been subverted. Knowledge of the TP's generally-available public key enables simple verification of the certificate 350. The non-volatile memory 35 also contains an identity (ID) label 353. The ID label 353 is a conventional ID label, for example a serial number, that is unique within some context. The ID label 353 is generally used for indexing and labelling of data relevant to the trusted device 24, but is insufficient in itself to prove the identity of the platform 10 under trusted conditions.

The trusted device 24 is equipped with at least one method of reliably measuring or acquiring the integrity metric of the computing platform 10 with which it is associated. In the present embodiment, the integrity metric is acquired by the measurement function 31 by generating a digest of the BIOS instructions in the BIOS memory. Such an acquired integrity metric, if verified as described above, gives a potential user of the platform 10 a high level of confidence that the platform 10 has not been subverted at a hardware, or BIOS program, level. Other known processes, for example virus checkers, will typically be in place to check that the operating system and application program code has not been subverted.

The measurement function 31 has access to: non-volatile memory 3 for storing a hash program 354 and a private key 355 of the trusted device 24, and volatile memory 4 for storing acquired integrity metric in the form of a digest 361. In appropriate embodiments, the volatile memory 4 may also be used to store the public keys and associated ID labels 360a-360n of one or more authentic smart cards 19s that can be used to gain access to the platform 10.

In one preferred implementation, as well as the digest, the integrity metric includes a Boolean value, which is stored in volatile memory 4 by the measurement function 31, for reasons that will become apparent.

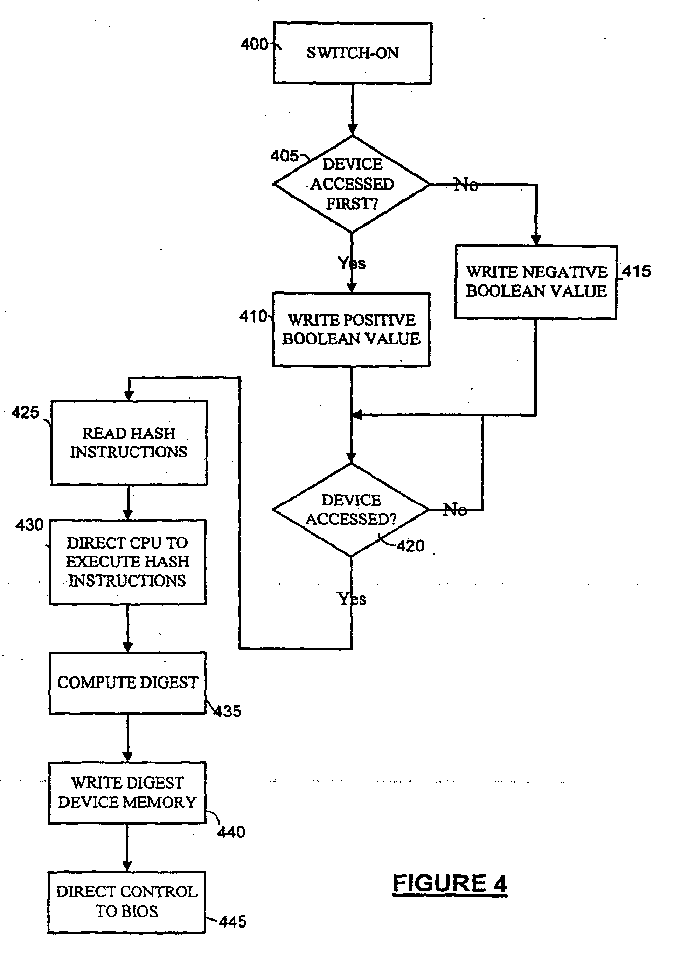

A preferred process for acquiring an integrity metric will now be described with reference to Figure 4.

In step 400, at switch-on, the measurement function 31 monitors the activity of the main processor 21 on the data, control and address lines (26, 27 & 28) to determine whether the trusted device 24 is the first memory accessed. Under conventional operation, a main processor would first be directed to the BIOS memory first in order to execute the BIOS program. However, in accordance with the present embodiment, the main processor 21 is directed to the trusted device 24, which acts as a memory. In step 405, if the trusted device 24 is the first memory accessed, in step 410, the measurement function 31 writes to volatile memory 3 a Boolean value which indicates that the trusted device 24 was the first memory accessed. Otherwise, in step 415, the measurement function writes a Boolean value which indicates that the trusted device 24 was not the first memory accessed.

In the event the trusted device 24 is not the first accessed, there is of course a chance that the trusted device 24 will not be accessed at all. This would be the case, for example, if the main processor 21 were manipulated to run the BIOS program first. Under these circumstances, the platform would operate, but would be unable to verify its integrity on demand, since the integrity metric would not be available. Further, if the trusted device 24 were accessed after the BIOS program had been accessed, the Boolean value would clearly indicate lack of integrity of the platform.

In step 420, when (or if) accessed as a memory by the main processor 21, the main processor 21 reads the stored native hash instructions 354 from the measurement function 31 in step 425. The hash instructions 354 are passed for processing by the main processor 21 over the data bus 26. In step 430, main processor 21 executes the hash instructions 354 and uses them, in step 435, to compute a digest of the BIOS memory 29, by reading the contents of the BIOS memory 29 and processing those contents according to the hash program. In step 440, the main processor 21 writes the computed digest 361 to the appropriate non-volatile memory location 4 in the trusted device 24. The measurement function 31, in step 445, then calls the BIOS program in the BIOS memory 29, and execution continues in a conventional manner.

Clearly, there are a number of different ways in which the integrity metric may be calculated, depending upon the scope of the trust required. The measurement of the BIOS program's integrity provides a fundamental check on the integrity of a platform's underlying processing environment. The integrity metric should be of such a form that it will enable reasoning about the validity of the boot process - the value of the integrity metric can be used to verify whether the platform booted using the correct BIOS. Optionally, individual functional blocks within the BIOS could have their own digest values, with an ensemble BIOS digest being a digest of these individual digests. This enables a policy to state which parts of BIOS operation are critical for an intended purpose, and which are irrelevant (in which case the individual digests must be stored in such a manner that validity of operation under the policy can be established).

Other integrity checks could involve establishing that various other devices, components or apparatus attached to the platform are present and in correct working order. In one example, the BIOS programs associated with a SCSI controller could be verified to ensure communications with peripheral equipment could be trusted. In another example, the integrity of other devices, for example memory devices or coprocessors, on the platform could be verified by enacting fixed challenge/response interactions to ensure consistent results. Where the trusted device 24 is a separable component, some such form of interaction is desirable to provide an appropriate logical binding between the trusted device 14 and the platform. Also, although in the present embodiment the trusted device 24 utilises the data bus as its main means of communication with other parts of the platform, it would be feasible, although not so convenient, to provide alternative communications paths, such as hard-wired paths or optical paths. Further, although in the present embodiment the trusted device 24 instructs the main processor 21 to calculate the integrity metric in other embodiments, the trusted device itself is arranged to measure one or more integrity metrics.

Preferably, the BIOS boot process includes mechanisms to verify the integrity of the boot process itself. Such mechanisms are already known from, for example, Intel's draft "Wired for Management baseline specification v 2.0 - BOOT Integrity Service", and involve calculating digests of software or firmware before loading that software or firmware. Such a computed digest is compared with a value stored in a certificate provided by a trusted entity, whose public key is known to the BIOS. The software/firmware is then loaded only if the computed value matches the expected value from the certificate, and the certificate has been proven valid by use of the trusted entity's public key. Otherwise, an appropriate exception handling routine is invoked.

Optionally, after receiving the computed BIOS digest, the trusted device 24 may inspect the proper value of the BIOS digest in the certificate and not pass control to the BIOS if the computed digest does not match the proper value. Additional, or alternatively, the trusted device 24 may inspect the Boolean value and not pass control back to the BIOS if the trusted device 24 was not the first memory accessed. In either of these cases, an appropriate exception handling routine may be invoked.

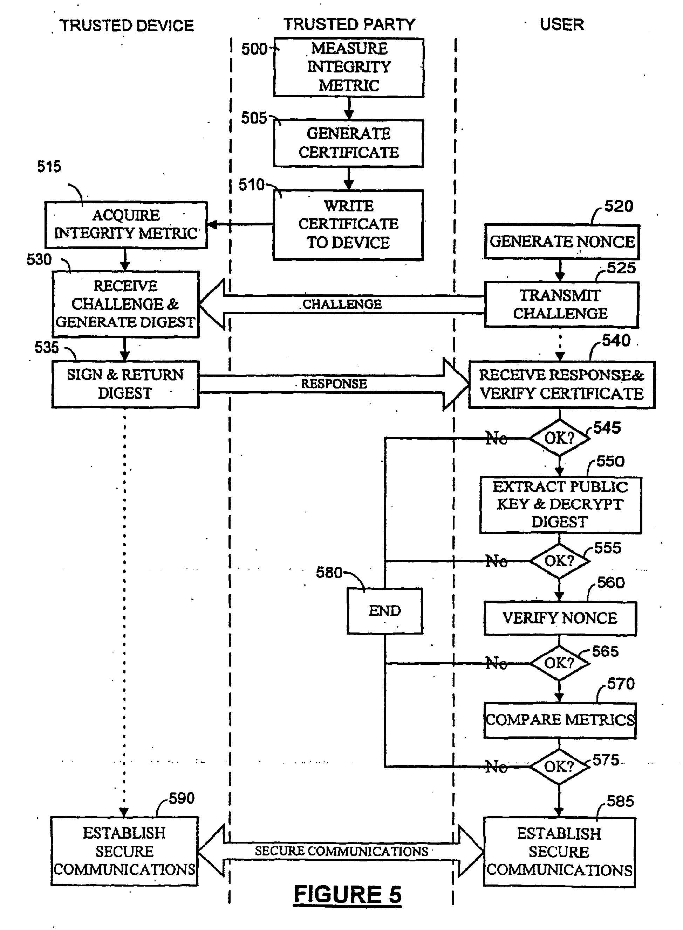

Figure 5 illustrates the flow of actions by a TP, the trusted device 24 incorporated into a platform, and a user (of a remote platform) who wants to verify the integrity of the trusted platform. It will be appreciated that substantially the same steps as are depicted in Figure 5 are involved when the user is a local user. In either case, the user would typically rely on some form of software application to enact the verification. It would be possible to run the software application on the remote platform or the trusted platform. However, there is a chance that, even on the remote platform, the software application could be subverted in some way. Therefore, it is preferred that, for a high level of integrity, the software application would reside on a smart card of the user, who would insert the smart card into an appropriate reader for the purposes of verification. The present invention relates to such an arrangement.

At the first instance, a TP, which vouches for trusted platforms, will inspect the type of the platform to decide whether to vouch for it or not. This will be a matter of policy. If all is well, in step 500, the TP measures the value of integrity metric of the platform. Then, the TP generates a certificate, in step 505, for the platform. The certificate is generated by the TP by appending the trusted device's public key, and optionally its ID label, to the measured integrity metric, and signing the string with the TP's private key.

The trusted device 24 can subsequently prove its identity by using its private key to process some input data received from the user and produce output data, such that the input/output pair is statistically impossible to produce without knowledge of the private key. Hence, knowledge of the private key forms the basis of identity in this case. Clearly, it would be feasible to use symmetric encryption to form the basis of identity. However, the disadvantage of using symmetric encryption is that the user would need to share his secret with the trusted device. Further, as a result of the need to share the secret with the user, while symmetric encryption would in principle be sufficient to prove identity to the user, it would insufficient to prove identity to a third party, who could not be entirely sure the verification originated from the trusted device or the user.

In step 510, the trusted device 24 is initialised by writing the certificate 350 into the appropriate non-volatile memory locations 3 of the trusted device 24. This is done, preferably, by secure communication with the trusted device 24 after it is installed in the motherboard 20. The method of writing the certificate to the trusted device 24 is analogous to the method used to initialise smart cards by writing private keys thereto. The secure communications is supported by a 'master key', known only to the TP, that is written to the trusted device (or smart card) during manufacture, and used to enable the writing of data to the trusted device 24; writing of data to the trusted device 24 without knowledge of the master key is not possible.

At some later point during operation of the platform, for example when it is switched on or reset, in step 515, the trusted device 24 acquires and stores the integrity metric 361 of the platform.

When a user wishes to communicate with the platform, in step 520, he creates a nonce, such as a random number, and, in step 525, challenges the trusted device 24 (the operating system of the platform, or an appropriate software application, is arranged to recognise the challenge and pass it to the trusted device 24, typically via a BIOS-type call, in an appropriate fashion). The nonce is used to protect the user from deception caused by replay of old but genuine signatures (called a 'replay attack') by untrustworthy platforms. The process of providing a nonce and verifying the response is an example of the well-known 'challenge/response' process.

In step 530, the trusted device 24 receives the challenge and creates an appropriate response. This may be a digest of the measured integrity metric and the nonce, and optionally its ID label. Then, in step 535, the trusted device 24 signs the digest, using its private key, and returns the signed digest, accompanied by the certificate 350, to the user.

In step 540, the user receives the challenge response and verifies the certificate using the well known public key of the TP. The user then, in step 550, extracts the trusted device's 24 public key from the certificate and uses it to decrypt the signed digest from the challenge response. Then, in step 560, the user verifies the nonce inside the challenge response. Next, in step 570, the user compares the computed integrity metric, which it extracts from the challenge response, with the proper platform integrity metric, which it extracts from the certificate. If any of the foregoing verification steps fails, in steps 545, 555, 565 or 575, the whole process ends in step 580 with no further communications taking place.

Assuming all is well, in steps 585 and 590, the user and the trusted platform use other protocols to set up secure communications for other data, where the data from the platform is preferably signed by the trusted device 24.

Further refinements of this verification process are possible. It is desirable that the challenger becomes aware, through the challenge, both of the value of the platform integrity metric and also of the method by which it was obtained. Both these pieces of information are desirable to allow the challenger to make a proper decision about the integrity of the platform. The challenger also has many different options available - it may accept that the integrity metric is recognised as valid in the trusted device 24, or may alternatively only accept that the platform has the relevant level of integrity if the value of the integrity metric is equal to a value held by the challenger (or may hold there to be different levels of trust in these two cases).

The techniques of signing, using certificates, and challenge/response, and using them to prove identity, are well known to those skilled in the art of security and therefore need not be described in any more detail herein.

The user's smart card 19 is a token device, separate from the computing entity, which interacts with the computing entity via the smart card reader port 19. A user may have several different smart cards issued by several different vendors or service providers, and may gain access to the internet or a plurality of network computers from any one of a plurality of computing entities as described herein, which are provided with a trusted component and smart card reader. A user's trust in the individual computing entity to which s/he is using is derived from the interaction between the user's trusted smart card token and the trusted component of the computing entity. The user relies on their trusted smart card token to verify the trustworthiness of the trusted component.

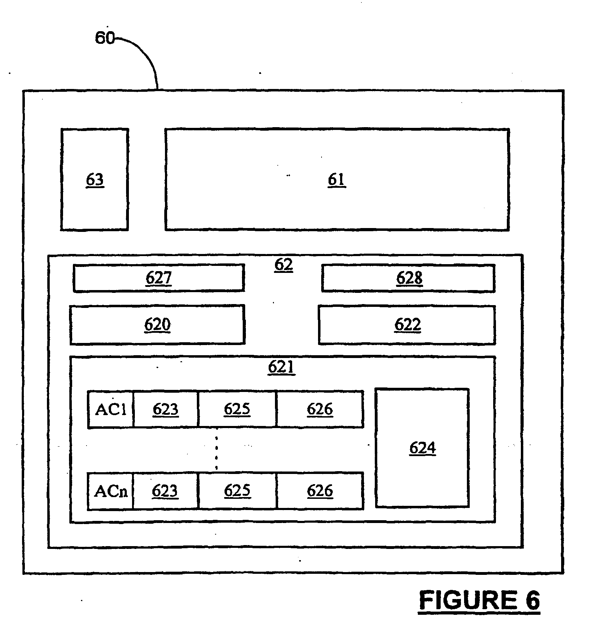

A processing part 60 of a user smart card 19 is illustrated in Figure 6. As shown, the user smart card 19 processing part 60 has the standard features of a processor 61, memory 62 and interface contacts 63. The processor 61 is programmed for simple challenge/response operations involving authentication of the user smart card 19 and verification of the platform 10, as will be described below. The memory 62 contains its private key 620, its public key 628, (optionally) a user profile 621, the public key 622 of the TP and an identity 627. The user profile 621 lists the allowable auxiliary smart cards 20 AC1-ACn usable by the user, and the individual security policy 624 for the user. For each auxiliary smart card 20, the user profile includes respective identification information 623, the trust structure 625 between the smart cards (if one exists) and, optionally, the type or make 626 of the smart card.

In the user profile 621, each auxiliary smart card 20 entry AC1-ACn includes associated identification information 623, which varies in dependence upon the type of card. For example, identification information for a cash card typically includes a simple serial number, whereas, for a crypto card, the identification information typically comprises the public key (or certificate) of the crypto card (the private key being stored secretly on the crypto card itself).

The 'security policy' 624 dictates the permissions that the user has on the platform 10 while using an auxiliary smart card 20. For example, the user interface may be locked or unlocked while an auxiliary smart card 20 is in use, depending on the function of the auxiliary smart card 20. Additionally, or alternatively, certain files or executable programs on the platform 10 may be made accessible or not, depending on how trusted a particular auxiliary smart card 20 is. Further, the security policy 624 may specify a particular mode of operation for the auxiliary smart card 20, such as 'credit receipt' or temporary delegation', as will be described below.

A 'trust structure' 625 defines whether an auxiliary smart card 20 can itself 'introduce' further auxiliary smart cards 20 into the system without first re-using the user smart card 19. In the embodiments described in detail herein, the only defined trust structure is between the user smart card 19 and the auxiliary smart cards 20 that can be introduced to the platform 10 by the user smart card 19. Introduction may be 'single session' or 'multi-session', as will be described below. However, there is no reason why certain auxiliary smart cards 20 could not in practice introduce further auxiliary smart cards 20. This would require an auxiliary smart card 20 to have an equivalent of a user profile listing the or each auxiliary smart card that it is able to introduce.

Use of auxiliary smart cards 20 is not a necessary feature of the present invention, and is not described further in the present application. Use of auxiliary smart cards is the subject of the present applicant's copending International Patent Application of even date entitled "Computing Apparatus and Methods of Operating Computing Apparatus", which is incorporated by reference herein.

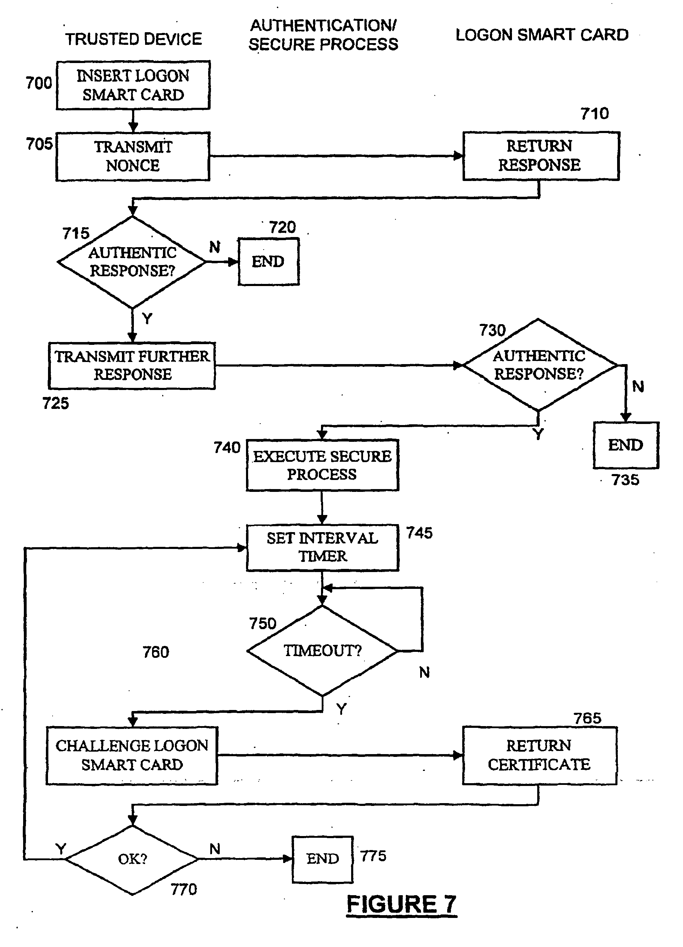

A preferred process for authentication between a user smart card 19 and a platform 10 will now be described with reference to the flow diagram in Figure 7. As will be described, the process conveniently implements a challenge/response routine. There exist many available challenge/response mechanisms. The implementation of an authentication protocol used in the present embodiment is mutual (or 3-step) authentication, as described in ISO/IEC 9798-3. Of course, there is no reason why other authentication procedures cannot be used, for example 2-step or 4-step, as also described in ISO/IEC 9798-3.

Initially, the user inserts their user smart card 19 into the smart card reader 12 of the platform 10 in step 700. Beforehand, the platform 10 will typically be operating under the control of its standard operating system and executing the authentication process, which waits for a user to insert their user smart card 19. Apart from the smart card reader 12 being active in this way, the platform 10 is typically rendered inaccessible to users by 'locking' the user interface (i.e. the screen, keyboard and mouse).

When the user smart card 19 is inserted into the smart card reader 12, the trusted device 24 is triggered to attempt mutual authentication in step by generating and transmitting a nonce A to the user smart card 19 in step 705. A nonce, such as a random number, is used to protect the originator from deception caused by replay of old but genuine responses (called a 'replay attack') by untrustworthy third parties.

In response, in step 710, the user smart card 19 generates and returns a response comprising the concatenation of: the plain text of the nonce A, a new nonce B generated by the user smart card 19, the ID 353 of the trusted device 24 and some redundancy; the signature of the plain text, generated by signing the plain text with the private key of the user smart card 19; and a certificate containing the ID and the public key of the user smart card 19.

The trusted device 24 authenticates the response by using the public key in the certificate to verify the signature of the plain text in step 715. If the response is not authentic, the process ends in step 720. If the response is authentic, in step 725 the trusted device 24 generates and sends a further response including the concatenation of: the plain text of the nonce A, the nonce B, the ID 627 of the user smart card 19 and the acquired integrity metric; the signature of the plain text, generated by signing the plain text using the private key of the trusted device 24; and the certificate comprising the public key of the trusted device 24 and the authentic integrity metric, both signed by the private key of the TP.

The user smart card 19 authenticates this response by using the public key of the TP and comparing the acquired integrity metric with the authentic integrity metric, where a match indicates successful verification, in step 730. If the further response is not authentic, the process ends in step 735.

If the procedure is successful, both the trusted device 24 has authenticated the user smart card 19 and the user smart card 19 has verified the integrity of the trusted platform 10 and, in step 740, the authentication process executes the secure process for the user. Then, the authentication process sets an interval timer in step 745. Thereafter, using appropriate operating system interrupt routines, the authentication process services the interval timer periodically to detect when the timer meets or exceeds a pre-determined timeout period in step 750.

Clearly, the authentication process and the interval timer run in parallel with the secure process.

When the timeout period is met or exceeded, the authentication process triggers the trusted device 24 to re-authenticate the user smart card 19, by transmitting a challenge for the user smart card 19 to identify itself in step 760. The user smart card 19 returns a certificate including its ID 627 and its public key 628 in step 765. In step 770, if there is no response (for example, as a result of the user smart card 19 having been removed) or the certificate is no longer valid for some reason (for example, the user smart card has been replaced with a different smart card), the session is terminated by the trusted device 24 in step 775. Otherwise, in step 770, the process from step 745 repeats by resetting the interval timer.

Several different implementations of the invention are possible. In a preferred first implementation, the monitor 18 may be driven directly by a monitor subsystem contained within the trusted component itself. In this embodiment, in the trusted component space are resident the trusted component itself, and displays generated by the trusted component on monitor 18. This arrangement is described further in the applicant's EP-A-1055989.

In a preferred first implementation, this subsystem resides on the computer platform, and provides interfaces between the smartcard reader, the trusted component, and the monitor. The subsystem functionality is built into the trusted component, and resides within the trusted space. The subsystem interfaces between the computer platform and smartcard, and the trusted component.

The subsystem is not critical for maintaining trust in the trusted component, in other implementations, the subsystem optionally can reside on the computer platform in the 'untrusted' computer platform space.

In a second implementation, the trusted component (device) is accessed via the smart card reader 19 and smart card interface via a software subsystem. The subsystem also provides an application interface function for interfacing between applications and the trusted component; and a verification application for verifying via a third party accessed over the internet, or via a local area network/wide area network, integrity metrics data obtained by trusted component.

The trust placed in the computer entity by a user is composed of three separate parts;
- Trust placed in the user's trusted token device.
- The trust placed in the trusted component.

As described herein, levels or degrees of trust placed in the computer entity are determined as being relative to a level of trust which is placed in the trusted component and the smart card. Although the amount of trust in a computer entity is related to many factors, a key factor in measuring that trust are the types, extent and regularity of integrity metrics checks which the trusted component itself carries out on the computer entity, and the type, regularity and quality of the checks the smart card makes on the trusted component.

Once the user has established by use of their smart card that the trusted component is operating correctly, the trusted component is implicitly trusted. The trusted component is embedded as the root of any trust which is placed in the computing platform and the computing platform as a whole cannot be any more trusted than the amount of trust placed in the trusted component.

Although other computing entities can interact directly with a trusted component, by means of encrypted messages, to verify the operation of a trusted component, a human user operating a computing entity cannot directly interface with a trusted component, because the human user is a biological entity who is not capable of generating digital encrypted signals. The human user must rely on his visual and audio senses to verify the trustworthiness of a computing entity. The human user, in the general case, has no knowledge of the mechanisms at work inside the computing entity, and in the general. case will be of an average level of education and sophistication, that is to say a normal average person.

The user is therefore provided with a trusted token in the form of a smart card, in which the user may place a high degree of trust. The user's smart card can interact with the trusted component of the computer entity in order to:
- Prove the identity of a trusted component to the user.
- Verify that the computer platform inside the computing entity is operating correctly, by virtue of integrity metrics measurement carried out on the computer platform by the trusted component.

Therefore, in the system of computing entities, there are chains of trust involved as follows:
- The user must trust the trusted token. This trust is based upon the reputation of the provider of the trusted token, who will typically be a corporation having access to the necessary technical and engineering resources to enable correct operation of the trusted token.
- Trust between the trusted token and trusted component. The trusted token smartcard must be able to verify correct operation of the trusted component using the smartcard.
- Trust in the computer platform. The trust in the computer platform derives from the monitoring of the computer platform by the trusted component, which is itself trusted.

Within this chain of trust, the link between the user and a computer entity can be viewed from the perspective of the user, the trusted platform which the user is using, and from the perspective of the trusted token (the smart card), as described hereunder.

From the user's point-of-view, the user can only trust what s/he sees on the computer screen, and what s/he hears on the computer's audio output and/or printed output. The user is provided with a trusted token in the form of a smart card 19 which can be inserted into smart card reader 12 of the computing entity. The smart card carries out interactions using cryptographic messages and interrogations on behalf of the user. The smart card is capable of initiating a request to the trusted component to perform integrity metrics, and is capable of denying authorization to application programs in the event that the smart card does not receive a satisfactory response to a request for verification from a trusted component.

Specific implementations for carrying out the invention are described: in each, the computing entity has a plurality of possible modes of operation.

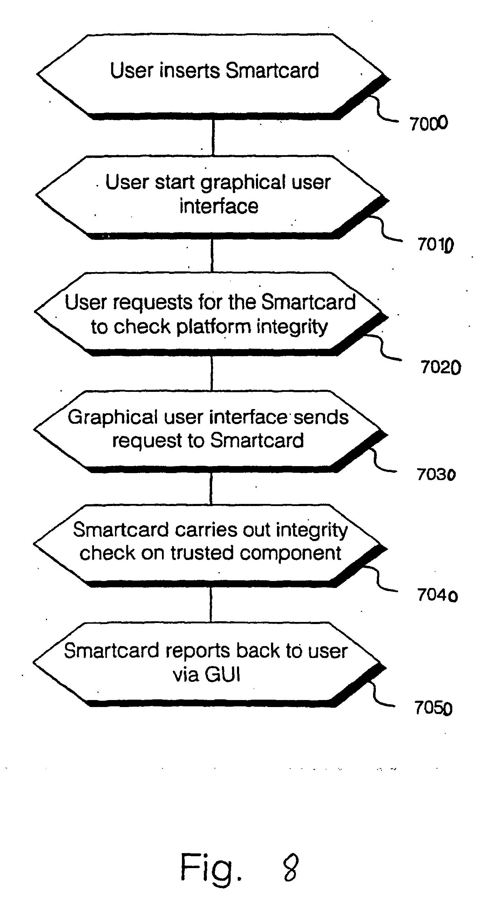

Referring to Fig. 8 herein, there is illustrated a first mode of operation of a computer system comprising a computing entity and a smart card under control of a user following a first process. In the process of Fig. 8, there is no application residing on the computing entity which requires use of the user's smart card. The user is simply verifying the trustworthiness of the computing platform within the computer entity with the aid of the smart card. In general, a user will wish to check the integrity of a computing entity as soon as the user logs on, and before the user performs any sensitive operations. The smart card can be programmed to verify the integrity of the computing entity, via its trusted component, before the user carries out any other tasks using the computing entity. In step 7000, a user inserts the smart card into the smart card reader of the computing entity which s/he is to use. In step 7010, the user starts to use the graphical user interface of the computing platform. In step 7020, a verification application whose purpose is to enable a user having a smart card to check the integrity of a trusted component of the computing entity and which is preloaded onto the computer platform, is activated by the user. Such activation may be by activating a pointing device, e.g. a mouse or track-ball which is visually placed over an icon displayed on a visual display of the computing entity. The verification interface receives the commands from the graphical user interface for initiating a check of the trusted component by the smart card and processes these into instructions in a form in which the smart card can be instructed by the application to commence a verification process. In step 7030, the interface sends a request signal to the smart card requesting the smart card to commence a verification operation on the trusted component. In step 7040, the smart card carries out integrity checks on the trusted component. All communications between the smart card and the trusted component are in encrypted format: The precise method by which the smart card verifies the integrity of the trusted component is by the challenge-response integrity check method described with reference to Figures 5 and 7 above. In step 7050 the smart card, having completed the integrity check on the trusted component reports back to the user by displaying on the graphical user interface. The trusted component may report back to the user using the graphical user interface by a variety of methods, some of which are the subject of separate patent applications by the applicant, and which are outside the scope of this disclosure.

In one such method, the smart card uses the trusted component to control the display on the monitor 18 to display information describing the computer platform, which has been determined by the trusted component, and in which an image specific to the smart card is displayed on the visual display unit. For example, the smart card may contain a difficult to recreate image data, preferably known only to the user. The trusted component may retrieve this image data from the smart card and display it on the monitor, combined with other information describing integrity metrics and operation of the computer platform. Because the computing entity has no other way of obtaining the image data except from the user's smart card, where it is pre-stored, and because the user can visually identify with a high degree of accuracy that the image is genuine, by visual inspection, the user then has confidence that the computing entity has in fact interacted with the smart card (otherwise the image would not be obtainable).

Alternatively, in step 7050, instead of the image data being displayed on the monitor of a computing entity which is being checked, the user may remove his smart card from the smart card reader, and insert the smart card into his own palmtop device. The palmtop device is personal to the user, and therefore the user may trust the palmtop device to a higher extent than the computer entity. The palmtop reader reads data from the smart card verifying that the computer entity has passed the challenge-response tests made by the smart card. The palmtop computer then displays to the user the information that the computer entity has passed the challenge-response test set by the smart card. The user takes this as verification that the computing entity is trusted.

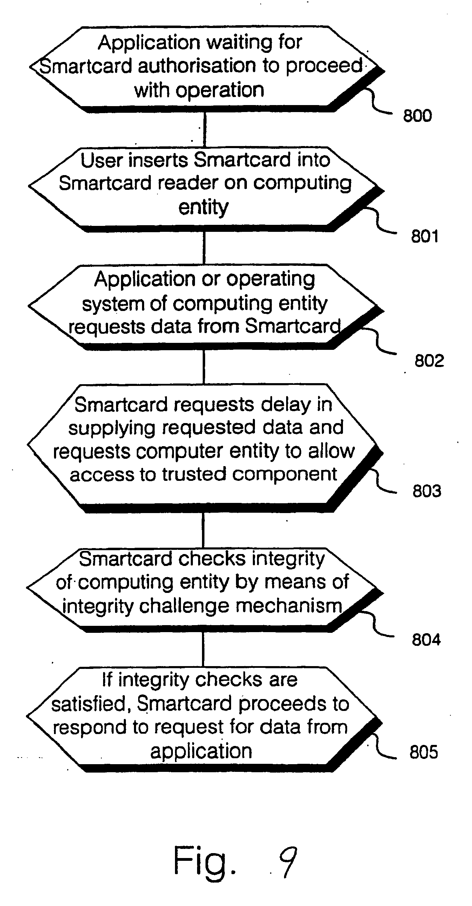

The above method operates where a user wishes to use a computing entity, and simply wishes to know whether the computing entity can be trusted. By contrast, Figure 9 shows schematically a second mode of operation in a case where an application resident on the computing entity, or resident on a remote computing entity with which the user wishes to communicate, requires that a user authorizes an operation, for example a commercial transaction operation.

The smart card is configured by a system administrator, or smart card service provider with details particular to the user. In step 800, the user inserts the smart card into the smart card reader of the computing entity. In step 801 the application or the operating system of the computing entity requests data from the smart card. In step 803, the smart card responds by sending a delay message to the computing entity, and requesting from the computing entity access to the computing entity's trusted component, so that the smart card can verify the integrity of the computing entity. In step 804, the smart card corresponds with the trusted component of the computing entity by means of integrity checks according to a challenge-response process as described herein above, to check the integrity of the computing entity. In step 805, if the smart card determines that the integrity checks have been satisfied by the trusted component, the smart card proceeds to respond to the request from the operating system or application for data for completing the operation.

The smart card is programmed in such a way that the smart card will never accept an interaction with an application, for example for the purposes of authentication, or to provide some cryptographic services, unless it can first verify the integrity of the computing entity to which it is connected by means of correspondence with a trusted component of the computing entity, in which the trusted component authenticates and checks integrity metrics of the computing platform. In this way, the user, who implicitly trusts the smart card, is confident that his smart card will only accept to be used by an application once it has verified that it is in a trusted environment. The smart card does not need to explicitly report the results of the integrity checks to the user. The mere fact that an application has requested an interaction with a smart card and that requested interaction has been satisfied is proof that the smart card has been able to carry out this check and is satisfied with the result. Whether the smart card accepts or rejects an interaction with an application is based upon pre-determined policies which are pre-programmed onto the smart card by the smart card issuer, or which can be configured by a user by programming the smart card.

Configuration of the smart card memory may be made by a user if this facility is provided by a smart card vendor. For example a purchaser of a personal computer may be able to configure his own smart card to operate according to user preferences. The smart card may be pre-configured such that a user may be able to program the smart card to interact with a computing entity in a Microsoft Windows ™ environment, even where a trusted component does not exist in a computing entity. A smart card vendor may enable programming of a smart card through a device such as a PDA palmtop computer. The precise configuration of the capabilities of each smart card are specified by the smart card provider as a design issue.

As another example, an internet service provider may provide a smart card which only identifies itself correctly to the internet service provider, when it can verify that the computing entity into which it is inserted, has passed various integrity checks specified by the smart card. This provides protection for the internet service provider, to be able to confirm that a user will not connect to the internet service using an untrusted computer, which may be carrying viruses.

A feature of the above two methods is that they do not require initiation by user interaction, but are initiated by the action of the smart card being entered into the smart card reader of a computer entity. This is not essential to the invention, which is also applicable to initiation by user interaction or even by software applications. Examples of such arrangements will be described further below.

Referring to Fig. 9 herein, there will now be described one example of an operation of the computer entity during its interaction with a smart card adapted as a trusted token. This example is based upon known technology according to the PCSC specification found in standard ISO 7816, and viewable at www.pcscworkgroup.com, which in a preferred arrangement is modified to allow initiation of commands from the smart card.

Interaction between a smart card and the trusted component allows the smart card to authenticate the correct operation of the trusted component, and to obtain the trusted components response regarding integrity of the computer platform which the trusted component monitors. In a preferred implementation, the integrity verification process allows that the trusted component reports an interpreted result of a verification of correct operation of the computing entity to the smart card. However in another mode of implementation the trusted component may not provide the mechanism to interpret the integrity measurements for the smart card. In that case the smart card must have access to a trusted third party server which provides this functionality.

Typically access to a trusted third party server by the smart card will require the presence of a mechanism so that the smart card can request such access to be provided by the computing entity.

Assuming you have a smart card which can initiate a command to a trusted component, communicate with the trusted component for exchange of messages and information, send requests for information, receive results from the trusted component in response to those requests, and request access to third party server to be provided by the computing entity then integrity verification of the trusted component to the smart card can be achieved. Implementation of initiation of user commands from a smart card is known in "smartcards - from security tokens to intelligent adjuncts", by Boris Balacheff, Bruno Van Wilder, and David Chan published in CARDIS 1998 Proceedings.

The interactions involved in initiation of user commands from a smart card in accordance with Balacheff et al is briefly discussed with reference to Figure 9 (for fuller implementational detail the reader is referred to the article itself). The approach used is essentially similar to that used in GSM (specification GSM 11.14) to allow a Subscriber Identity Module (SIM) to initiate actions to be taken by mobile equipment. The functional role taken by mobile equipment in this arrangement is taken by what can be termed a PC Intelligent Adjunct (PCIA) module 900 within the platform - the smart card 901 interacts with this module. Firstly in step 902, the PCIA module makes essentially any command (C1). The results of the C1 command are fed back to the PCIA module in step 903., followed by a status response "91 XX" in step 904-this key step (an alternative to the normal "OK" code) enables the smart card 901 to advise the PCIA module 900 that it has information to send, and the length (XX) of the response data. The PCIA module then requests this additional data through a FETCH in step 905, with the result that a command C2 is provided by the smart card in step 906 and a result returned in step 907. An acknowledgement is provided by the smart card in step 908 - advantageously, an acknowledgement should then also be provided by the PCIA module (not shown).

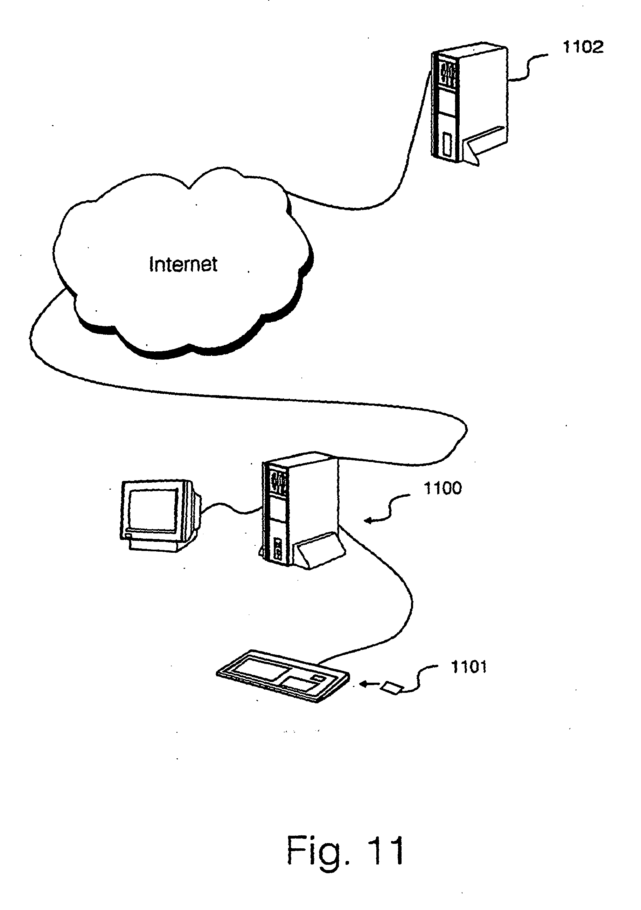

Referring to Fig. 11 herein, there is illustrated schematically a system of computer apparatus comprising a computing entity 1100 comprising a computer platform and a monitoring component as described herein before; a trusted token device 1101 capable of communicating with computing entity 1100; and a remote server 1102 capable of carrying out data processing functionality. The remote server 1102, also comprises a second computing platform and second monitoring component. In use, the remote server 1102 may be managed by a reliable service provider, for example an internet service provider, in which a user of a trusted token device may have a degree of trust established through, for example, a contractual relationship with the internet service provider, such as subscribing to a service provided by the internet service provider.

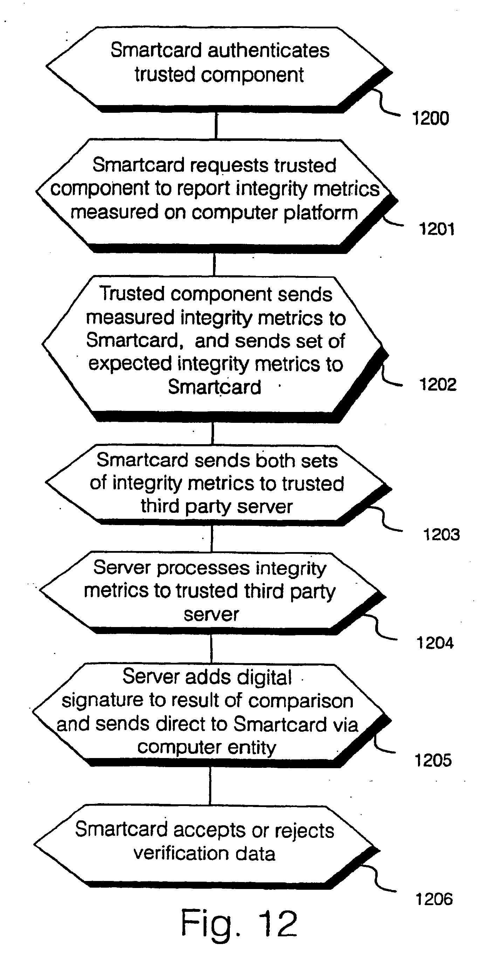

Referring to Fig. 12 herein, there is illustrated schematically a third mode of operation of a token device and a computing entity within the system of computers illustrated in Fig. 11. In this mode of operation, a monitoring component (trusted component) within the computing entity 1100 is requested by the smart card 1101 to provide a set of data checks on the computer platform within the computing entity 1100. Trusted token device 1101 may not have a sufficiently high data processing capability to carry out data processing on data supplied by the computer entity 1100. Therefore, the computer entity sends the integrity metrics data to a remote server 1102 trusted by smart card, which verifies that the integrity metrics data supplied by the monitoring component is correct by comparing this with a set of expected integrity metrics. The expected integrity metrics may be either supplied by the monitoring component itself, from pre-stored data within that component, or where the computer platform is of a common type, the trusted server 1102 may store sets of expected integrity metrics for that type of computer platform. In either case, the trusted server 1102 performs the heavy computational data processing required for verification of the integrity metrics with the expected integrity metrics, and digitally signs the result of this verification.

Dependent upon how the token device is pre-programmed and the amount of data processing capability resident on the trusted token device, various alternative versions of this third mode of operation are available.

In step 1200, the trusted token authenticates the trusted component as described herein before. In step 1201 the smart card requests the trusted component to verify the integrity metrics of the computer platform, and to report back to the smart card. In step 1202, the trusted component, having available the integrity metrics data as part of its ongoing monitoring of the computer platform, sends the integrity metrics data to the smart card, along with a set of certified expected integrity metrics for that computer platform. In step 1203, the smart card sends the received integrity metrics data and the certified expected integrity metrics data to the trusted third party server for computation. This message also includes an identification of the smart card device itself. Sending of the integrity metrics data and expected integrity metrics data from the smart card to the trusted server is via the computer entity itself, which routes the data, for example over the internet, to the remote trusted server 1102. In step 1204, the server processes the integrity metrics data, and verifies that the certified expected integrity metrics are currently certified, and compares it with the expected integrity metrics data received from the smart card. This is a heavy computational step, for which the trusted server is suited to. In step 1205, having compared the integrity metrics data with the expected integrity metrics data, the server may then send a verification data back to the smart card via the computer entity. The verification data may comprise a digital signature of the server. In step 1206, the smart card receives the verification data comprising a data signature and either accepts or rejects that digital signature as being valid, and therefore the verification data.

In one alternative arrangement, the trusted component may communicate directly with a third party server. Instead of steps 1202 and 1203, the trusted component sends the set of measured integrity metrics of the computer platform to a third party (the trusted component either knows which third party server will be trusted by the smart card or the smart card needs to specify which third party server should be used), together with the trusted component's own digital signature, and receives from the third party server the result of the verification of these integrity metrics and together with a digital signature. The third party server compares the set of integrity metrics received from the trusted component with its own stored set or a retrieved set of expected integrity metrics for the type of computer platform identified by the trusted component and adding its digital signature. The trusted component, having received the digital signature, then sends the set of integrity metrics together with the digital signature to the smart card.

From the perspective of the smart card, any application which interacts with the smart card, either a graphical user interface, or another application, must be aware of the fact that the smart card may request an interaction with a trusted component of a platform. In the case where the smart card will require to interact with a third party computing entity the application which interacts with the smart card must also allow the smart card to interact with a network server. However, in a preferred implementation, the smart card should be able to request access to integrity verification data of a computer platform independently from the application to which it is talking to on a computer entity.

Upon receiving a request from an application of a computing entity to use a functionality of the smart card, for example to authorize a transaction, the smart card may initiate a request for the monitoring component to supply monitoring information on the trustworthiness of the state of the computer platform. Communication between the smart card and the trusted component is by way of a protocol module resident on the computer platform which is responsible for communications between the computing entity and the smart card token device. When an application on the PC requires access to the smart card, the protocol stack handles these communications. The computing entity can therefore filter commands which come from the card and are independent from the computing entity application such as checking the integrity of the computer platform, and can accommodate commands which come from the smart card. From the point of view of the application, interactions of the smart card with other resources on the computing entity are transparent. This can be done using the technology in "smartcards - from security tokens to intelligent adjuncts", by Boris Balacheff, Bruno Van Wilder, and David Chan published in CARDIS 1998 Proceedings merged with PCSC technology.

Step 1201 may thus be initiated by the smart card as a result of one of a number of different trigger events. One possible trigger is the receipt by the smart card of a request from the graphical user interface, via the monitor subsystem, to check the trustworthiness of the platform. This signal is generated by the graphical user interface in response to keystroke inputs and/or pointing device inputs from a user. Alternatively, the smart card may receive a request for access to functionality generated by an application either resident on the local computing entity, or resident on a remote computing entity. Verification of integrity then proceeds essentially as shown above with respect to Figure 12.

Ideally, the server is bound with the smart card: for example both the server and the smart card may be issued by the same vendor, or body, such as an internet service provider.

For example, where the smart card is provided by an internet service provider, and the smart card is unable to authenticate the trustworthiness of a computing entity, then the internet service provider may either refuse to communicate with the computing entity, or may provide a limited set of functionality, such as those available to the general public, to the computing entity, rather than a full set of services available only to registered subscribers.

Having provided the trusted component, in one specific implementation according to the present invention, the remaining elements necessary for the smart card and the application to communicate with each other may be provided by essentially routine modifications to conventional applications. The necessary interaction may be provided with, for example, a conventional smart card pre-programmed to respond to a poll signal from an application by initiating a request to a trusted component to perform integrity metrics checks.

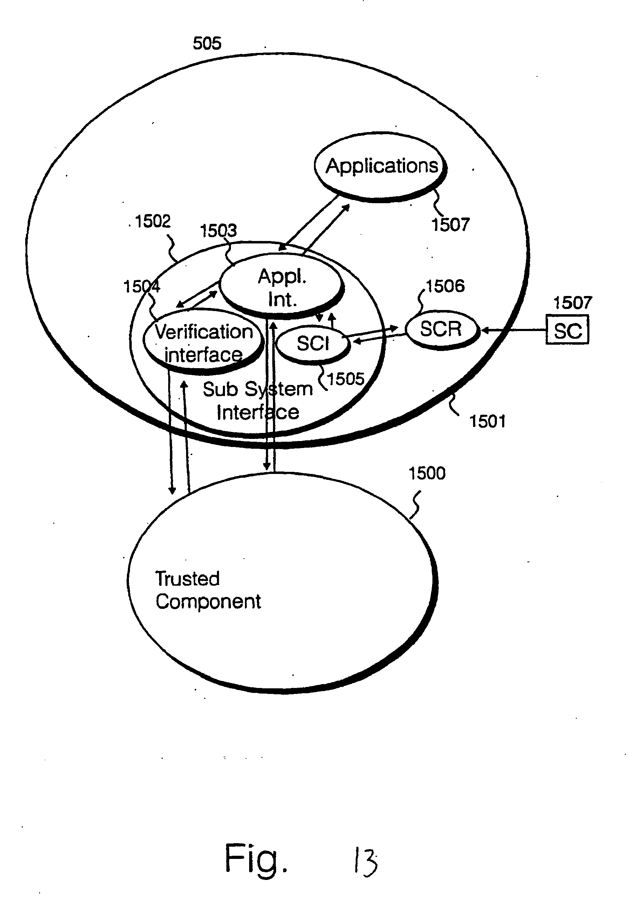

Referring to Fig. 13 herein, there is illustrated schematically elements of a possible first generation implementation of a system according to the present invention. Fig. 13 shows a logical view of components of first generation implementation. A trusted component 1500 comprises a processor and memory physically separated from a computer platform and resident in a trusted logical space as herein before described. The computer platform comprises a further processor and data storage means and is resident in a computer platform space 1501. Subsystem 1502 and applications 1503 reside in the computer space 1501. Subsystem 1502 contains an application interface 1503, a verification application 1504, and a smart card interface 1505. The smart card interface communicates with smart card reader 1506 which is also in the computer platform space 1501, which accepts smart card 1507. The application interface 1503, contains the PCIA stack.

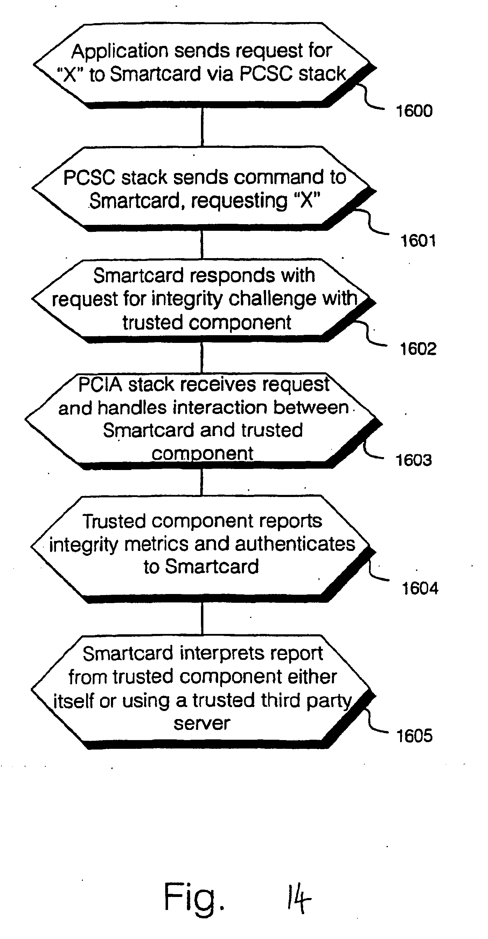

Referring to Fig. 14 herein, there is illustrated schematically a method of operation of the first generation implementation of Fig. 13 herein, for smart card 1507 interacting with the trusted component prior to giving a functionality 'X' in response to a request for functionality 'X' from an application. In this method of operation, calls to the PCSC stack could be done through the PCIA stack in order to provide the PCIA functionality transparently. In the best mode, the PCSC stack would incorporate the PCIA stack and functionality. In step 1600 the application sends the request for functionality 'X' to the smart card via the PCSC stack resident in the application interface 1503 in the subsystem 1502. In step 1601, the PCSC stack sends a command to the smart card, requesting functionality 'X' from smart card. In step 1602 the smart card responds with a request for verification of the trustworthiness of the computing entity, which is received by the PCSC stack. In step 1603, the PCSC stack receives the request; through PCIA functionality the message will be sent to the trusted component. Either by using the separate PCIA stack or through existing PCIA functionality the message is sent to the trusted component to initiate the integrity checks. This may be sent directly from the application interface 1503 to the trusted component 1500. In the first specific implementation the verification application 1504 and the subsystem 1502 is used by the trusted component to perform the integrity metrics checks. In a best mode implementation, the trusted component 1500 contains functionality within itself to perform these integrity checks on the computer platform directly. In step 1506, the trusted component (in conjunction with the verification application in the first implementation all by itself in the best mode) sends the result of the integrity verification with a digital signature and certificate data to the smartcard. In step 1607 the smartcard receives the result of the integrity verification with the digital signature, verifies the digital signature to authenticate the trusted component, and if satisfied, it trusts the result of the verification of integrity. Based on this result it then decides whether or not to provide the application with functionality "X". The application can then proceed. The smartcard has verified the trustworthiness of the computer platform by requesting to perform an integrity challenge on the computing entity's trusted component and only once satisfied about the result of this challenge accepts to provide functionality to the application.

## Claims

1. A system of computing apparatus comprising:
a computing platform (10) having a first data processor (21) and a first data storage means (22); and
a token device (19, 1101) being physically distinct and separable from said computing platform (10),
**characterised by** said system further comprising
a monitoring component (24) having a second data processor (30) and a second data storage means (3, 4), wherein said monitoring component (24) is configured to perform a plurality of data checks on said computing platform (10) and wherein the token device is also physically distinct and separable from said monitoring component; and
wherein in one mode of operation, said token device (19, 1101) operates to make an integrity challenge to said monitoring component (24) and said token device (19, 1101) will not undertake specific actions of which it is capable unless it receives a satisfactory response to said integrity challenge.

2. The system as claimed in claim 1, wherein said token device (19, 1101) receives a detailed response to said integrity challenge, and processes said integrity response to interpret said integrity response.

3. The system as claimed in claim 1, further comprising a third party server (1102), wherein a response to said integrity challenge is sent to said third party server (1102).

4. The system as claimed in claim 3, wherein said monitoring component (24) sends a detailed integrity response to the third party server (1102).

5. The system as claimed in claim 4, wherein said monitoring component (24) sends a detailed integrity response to a third party server (1102) if requested to do so in said integrity challenge.

6. The system as claimed in claim 4, wherein said monitoring component (24) reports a detailed integrity response to said token device (19, 1101) and said token device (19, 1101) sends said integrity response to said third party server (1102) if it requires the third party server (1102) to help interpret said detailed integrity response.

7. The system as claimed in any of claims 4 to 6, in which a third party server (1102) simplifies said integrity response to a form in which said token device (19, 1101) can interpret said integrity response.

8. The system as claimed in claim 7, wherein a third party server (1102) sends a simplified integrity response to said token device (19, 1101).

9. The system as claimed in claim 8, operating to add a digital signature data to said simplified integrity response, said digital signature authenticating said third party server (1102) to said token device (19, 1101).

10. The system as claimed in any one of the above claims, in which said token device (19, 1101) is requested to take an action.

11. The system as claimed in any one of the above claims, in which said token device (19, 1101) requests to take an action.

12. The system as claimed in any one of the above claims in which said token device (19, 1101) sends image data to said computer platform if a said satisfactory response to said integrity challenge is received, and said computer platform displays said image data.

13. The system as claimed in any preceding claim, wherein said monitoring component (24) is capable of establishing an identity of itself.

14. The system as claimed in any preceding claim, further comprising an interface means for interfacing between said monitoring component (24) and said token device (19, 1101).

15. The system as claimed in any preceding claim, wherein said system of computing apparatus is configured such that said monitoring component (24) reports said data checks to said token device (19, 1101), said data checks containing data describing a status of said computer platform.

16. The system as claimed in any preceding claim, wherein a said specific action comprises authorising said computing platform (10) to undertake a transaction on behalf of a user of said system.

17. The system as claimed in any preceding claim, wherein a said specific action comprises sending verification data to said computer platform, said verification data verifying correct operation of said computer platform; whereupon said computer platform is adapted to display said verification data on a visual display screen.

18. The system as claimed in any preceding claim, wherein the token device (19, 1101) is a smart card.

19. A system as claimed in any preceding claim, wherein the computing system further comprises
interface means for communication between the computing platform (10) and the token device (19, 1101), wherein said interface means communicate with said monitoring component (24), and wherein said computing system is configured such that said monitoring component (24) reports said data checks to said token device (19, 1101), said data checks containing data describing a status of said computer platform.

20. The system as claimed in claim 19, wherein on communication between said token device (19, 1101) and said interface means, said monitoring component (24) is activated to perform a monitoring operation on said computer platform, in which said monitoring component (24) obtains data describing an operating status of said computer platform.

21. The system as claimed in claim 19 or claim 20, wherein said interface means is resident substantially wholly within said monitoring component (24).

22. The system as claimed in claim 19 or claim 20, wherein said interface means comprises said computer platform.

23. The system as claimed in any of claims 19 to 22, wherein said interface means comprises a smart card reader.

24. The system as claimed in any of claims 19 to 23, wherein said interface means comprises a PCSC stack in accordance with PCSC Workgroup PC/SC Specification 1.0.

25. The system as claimed in any of claims 19 to 24, wherein said monitoring component (24) comprises a verification means configured to obtain a certification data independently certifying said status data, and to provide said certification data to said interface means.

26. The system as claimed in any of claims 19 to 25, wherein said interface means is configured to send and receive data according to a pro-active protocol.

27. A token device comprising a data processor and a memory device, said token device (19, 1101) configured to allow performance of at least one data processing or signaling function:
**characterised in that** said token device (19, 1101) operates to:
receive a request to perform said at least one data processing or signaling function from an element of a computing system;
generate a request for integrity data from a monitoring component (24) in said computing system to confirm the integrity of the computing system;
receive the integrity data from the monitoring component;
if said integrity data supplied to said token device (19, 1101) is satisfactory, then said token device (19, 1101) allows a said function; and
if said integrity data received by said token device (19, 1101) is unsatisfactory, then said token device (19, 1101) denies said function.

28. The token device as claimed in claim 27, said device being configured to be responsive to a poll signal operating in accordance with PC/SC specification 1.0, said token device (19, 1101) being capable of initiating a command to be handled by a software stack on the computer entity, in response to said poll signal according to said poll signal according to a proactive protocol.

29. A method of obtaining verification of a state of a computer entity, said computer entity comprising a computer platform and a monitoring component (24), said method comprising the steps of:
requesting access to a functionality from a token device (19, 1101);
in response to said request for access to functionality said token device (19,1101) generating a request signal requesting integrity data from said monitoring component (24) to confirm the integrity of said computer platform;
in response to said request for integrity data, said monitoring component (24) reporting integrity data to said token device (19, 1101) said integrity data describing a result of a monitoring operation;
by receipt of a satisfactory said integrity data, said token device (19,1101) offers said functionality; and
by receipt of an unsatisfactory said integrity data, said token device (19,1101) devices said functionality.

30. A method as claimed in claim 29, wherein said request for functionality is made by an application running on said computer platform.

31. A method as claimed in claim 29 or claim 30, in which said monitoring operation comprises the steps of:
said monitoring component (24) carrying out one or a plurality of data checks on components of said computing platform (10); and
said monitoring component (24) being able to report a set of certified reference data together with said data checks.

32. The method as claimed in claim 31, wherein said certified reference data includes a set of metrics to be expected when measuring particular components of said computing platform (10), and includes digital signature data identifying an entity that certifies said reference data.

33. The method as claimed in any of claims 29 to 33, comprising the step of reporting said integrity data by generating a visual display of confirmation data.

34. The method as claimed in any of claims 29 to 33, further comprising the step of adding a digital signature data to said recently integrity data, said digital signature data identifying said monitoring component (24); and
transmitting said integrity data and said digital signature data to said token device (19,1101).

35. The method as claimed in any of claims 29 to 34, wherein said monitoring component (24) sends a detailed integrity response to a third party server (1102) if requested in an integrity challenge by said token device (19, 1101).

36. The method as claimed in claim 35, wherein said monitoring component (24) reports a detailed integrity response to said token device (19, 1101), and said token device (19, 1101) sends said integrity response to a third party server (1102) if it requires the third party server (1102) to help interpret said detailed integrity response.

37. The method as claimed in claim 35 or claim 36, wherein a third party server (1102) simplifies said integrity response to a form in which said token device (19, 1101) can interpret said integrity response.

38. The method as claimed in claim 37, wherein a third party server (1102) sends a simplified integrity response to said token device (19, 1101).

39. The method as claimed in claim 38, further comprising the steps of:
adding a digital signature data to a simplified integrity response, said digital signature data authenticating a third party server (1102) to said token device (19, 1101).

40. A method as claimed in any of claims 29 to 39, further comprising the step of programming said token device (19, 1101) to respond to a received poll signal from said computer platform;
said request for functionality comprises said token device (19, 1101) receiving a poll signal from said computer platform; and
in response to said received poll signal, said token device (19, 1101) generating said request for integrity data by said monitoring component (24).

41. A method as claimed in claim 40, wherein said poll signal is received from an application program running on said computer platform.

42. A method as claimed in any of claims 29 to 41, wherein said token device (19, 1101) has data processing capability and behaves in an expected manner, is physically separable from said computing platform (10) and said monitoring component (24), and has cryptographic data processing capability, further comprising the step of
said monitoring component (24) proves its identity to said token device (19, 1101) and establishing a report to said token device (19, 1101) of at least one data check performed on said computing platform (10).

43. A method as claimed in any of claims 29 to 42, wherein said token device (19, 1101) is a smart card.

## Patentansprüche

1. Ein System einer Rechenvorrichtung, das folgende Merkmale aufweist:
eine Rechenplattform (10), die einen ersten Datenprozessor (21) und eine erste Datenspeichereinrichtung (22) aufweist; und
ein Token-Gerät (19, 1101), das von der Rechenplattform (10) physisch unterschiedlich und trennbar ist,
**dadurch gekennzeichnet, daß** das System ferner folgende Merkmale aufweist:
eine Überwachungskomponente (24), die einen zweiten Datenprozessor (30) und eine zweite Datenspeichereinrichtung (3, 4) aufweist, wobei die Überwachungskomponente (24) konfiguriert ist, um eine Mehrzahl von Datenüberprüfungen bei der Rechenplattform (10) durchzuführen, und wobei das Token-Gerät ferner von der Überwachungskomponente physisch unterschiedlich und trennbar ist; und
wobei das Token-Gerät (19, 1101) in einem Betriebsmodus wirksam ist, um eine Integritätsabfrage an die Überwachungskomponente (24) zu richten, und das Token-Gerät (19, 1101) keine spezifischen Schritte unternimmt, zu denen dasselbe in der Lage ist, wenn dasselbe keine zufriedenstellende Antwort auf die Integritätsabfrage empfängt.

2. Das System gemäß Anspruch 1, bei dem das Token-Gerät (19, 1101) eine detaillierte Antwort auf die Integritätsabfrage empfängt und die Integritätsantwort verarbeitet, um die Integritätsantwort zu interpretieren.

3. Das System gemäß Anspruch 1, das ferner einen Dritteilnehmerserver (1102) aufweist, wobei eine Antwort auf die Integritätsabfrage zu dem Dritteilnehmerserver (1102) gesendet wird.

4. Das System gemäß Anspruch 3, bei dem die Überwachungskomponente (24) eine detaillierte Integritätsantwort an den Dritteilnehmerserver (1102) sendet.

5. Das System gemäß Anspruch 4, bei dem die Überwachungskomponente (24) eine detaillierte Integritätsantwort an einen Dritteilnehmerserver (1102) sendet, falls dieselbe in der Integritätsabfrage dazu aufgefordert wird.

6. Das System gemäß Anspruch 4, bei dem die Überwachungskomponente (24) dem Token-Gerät (19, 1101) eine detaillierte Integritätsantwort berichtet und das Token-Gerät (19, 1101) die Integritätsantwort an den Dritteilnehmerserver (1102) sendet, falls dasselbe den Dritteilnehmerserver (1102) benötigt, um die detaillierte Integritätsantwort interpretieren zu helfen.

7. Das System gemäß einem der Ansprüche 4 bis 6, bei dem ein Dritteilnehmerserver (1102) die Integritätsantwort auf eine Form vereinfacht, in der das Token-Gerät (19, 1101) die Integritätsantwort interpretieren kann.

8. Das System gemäß Anspruch 7, bei dem ein Dritteilnehmerserver (1102) eine vereinfachte Integritätsantwort an das Token-Gerät (19, 1101) sendet.

9. Das System gemäß Anspruch 8, das wirksam ist, um der vereinfachten Integritätsantwort Digitale-Signatur-Daten hinzuzufügen, wobei die digitale Signatur den Dritteilnehmerserver (1102) dem Token-Gerät (19, 1101) gegenüber authentifiziert.

10. Das System gemäß einem der vorhergehenden Ansprüche, bei dem das Token-Gerät (19, 1101) aufgefordert wird, eine Handlung zu unternehmen.

11. Das System gemäß einem der vorhergehenden Ansprüche, bei dem das Token-Gerät (19, 1101) auffordert, eine Handlung zu unternehmen.

12. Das System gemäß einem der vorhergehenden Ansprüche, bei dem das Token-Gerät (19, 1101) Bilddaten an die Rechenplattform sendet, falls eine zufriedenstellende Antwort auf die Integritätsabfrage empfangen wird, und die Rechenplattform die Bilddaten anzeigt.

13. Das System gemäß einem der vorhergehenden Ansprüche, bei dem die Überwachungskomponente (24) zum Einrichten einer eigenen Identität in der Lage ist.

14. Das System gemäß einem der vorhergehenden Ansprüche, das ferner eine Schnittstelleneinrichtung zum Bilden einer Schnittstelle zwischen der Überwachungskomponente (24) und dem Token-Gerät (19, 1101) aufweist.

15. Das System gemäß einem der vorhergehenden Ansprüche, wobei das System einer Rechenvorrichtung derart konfiguriert ist, daß die Überwachungskomponente (24) die Datenüberprüfungen dem Token-Gerät (19, 1101) berichtet, wobei die Datenüberprüfungen Daten enthalten, die einen Status der Rechenplattform beschreiben.

16. Das System gemäß einem der vorhergehenden Ansprüche, bei dem die spezifische Handlung ein Autorisieren der Rechenplattform (10) aufweist, eine Transaktion im Namen eines Benutzers des Systems zu unternehmen.

17. Das System gemäß einem der vorhergehenden Ansprüche, bei dem die spezifische Handlung ein Senden von Verifizierungsdaten an die Rechenplattform aufweist, wobei die Verifizierungsdaten eine korrekte Operation der Rechenplattform verifizieren; woraufhin die Rechenplattform angepaßt ist, um die Verifizierungsdaten auf einem visuellen Anzeigebildschirm anzuzeigen.

18. Das System gemäß einem der vorhergehenden Ansprüche, bei dem das Token-Gerät (19, 1101) eine Smartcard ist.

19. Ein System gemäß einem der vorhergehenden Ansprüche, bei dem das Rechensystem ferner folgende Merkmale aufweist:
eine Schnittstelleneinrichtung für eine Kommunikation zwischen der Rechenplattform (10) und dem Token-Gerät (19, 1101), wobei die Schnittstelleneinrichtung mit der Überwachungskomponente (24) kommuniziert und wobei das Rechensystem konfiguriert ist, derart, daß die Überwachungskomponente (24) die Datenüberprüfungen an das Token-Gerät (19, 1101) berichtet, wobei die Datenüberprüfungen Daten enthalten, die einen Status der Rechenplattform beschreiben.

20. Das System gemäß Anspruch 19, bei dem die Überwachungskomponente (24) auf eine Kommunikation zwischen dem Token-Gerät (19, 1101) und der Schnittstelleneinrichtung hin aktiviert wird, um bei der Rechenplattform eine Überwachungsoperation durchzuführen, wobei die Überwachungskomponente (24) Daten erhält, die einen Betriebsstatus der Rechenplattform beschreiben.

21. Das System gemäß Anspruch 19 oder Anspruch 20, bei dem die Schnittstelleneinrichtung im wesentlichen ganz innerhalb der Überwachungskomponente (24) gelegen ist.

22. Das System gemäß Anspruch 19 oder Anspruch 20, bei dem die Schnittstelleneinrichtung die Rechenplattform aufweist.

23. Das System gemäß einem der Ansprüche 19 bis 22, bei dem die Schnittstelleneinrichtung eine Smartcard-Lesevorrichtung aufweist.

24. Das System gemäß einem der Ansprüche 19 bis 23, bei dem die Schnittstelleneinrichtung einen PCSC-Stapel gemäß PCSC Workgroup PC/SC Specification 1.0 aufweist.

25. Das System gemäß einem der Ansprüche 19 bis 24, bei dem die Überwachungskomponente (24) eine Verifizierungseinrichtung aufweist, die konfiguriert ist, um Zertifizierungsdaten zu erhalten, die die Statusdaten unabhängig zertifizieren, und um die Zertifizierungsdaten an die Schnittstelleneinrichtung zu liefern.

26. Das System gemäß einem der Ansprüche 19 bis 25, bei dem die Schnittstelleneinrichtung konfiguriert ist, um Daten gemäß einem proaktiven Protokoll zu senden und zu empfangen.

27. Ein Token-Gerät, das einen Datenprozessor und ein Speichergerät aufweist, wobei das Token-Gerät (19, 1101) konfiguriert ist, um eine Durchführung von zumindest einer Datenverarbeitungs- oder Signalisierungsfunktion zu erlauben:
**dadurch gekennzeichnet, daß** das Token-Gerät (19, 1101) wirksam ist, um:
von einem Element eines Rechensystems eine Aufforderung zu empfangen, um die zumindest eine Datenverarbeitungs- oder Signalisierungsfunktion durchzuführen;
eine Anforderung nach Integritätsdaten von einer Überwachungskomponente (24) in dem Rechensystem zu erzeugen, um die Integrität des Rechensystems zu bestätigen;
die Integritätsdaten von der Überwachungskomponente zu empfangen;
falls die an das Token-Gerät (19, 1101) gelieferten Integritätsdaten zufriedenstellend sind, dann erlaubt das Token-Gerät (19, 1101) die Funktion; und
falls die durch das Token-Gerät (19, 1101) empfangenen Integritätsdaten nicht zufriedenstellend sind, dann verweigert das Token-Gerät (19, 1101) die Funktion.

28. Das Token-Gerät gemäß Anspruch 27, wobei das Gerät konfiguriert ist, auf ein Abrufsignal anzusprechen, das gemäß PC/SC Specification 1.0 wirksam ist, wobei das Token-Gerät (19, 1101) zum Einleiten eines Befehls in der Lage ist, der durch einen Softwarestapel an der Computerentität gehandhabt werden soll, ansprechend auf das Abrufsignal gemäß dem Abrufsignal gemäß einem proaktiven Protokoll.

29. Ein Verfahren zum Erhalten einer Verifizierung eines Zustands einer Computerentität, wobei die Computerentität eine Computerplattform und eine Überwachungskomponente (24) aufweist, wobei das Verfahren folgende Schritte aufweist:
Anfordern eines Zugriffs auf eine Funktionalität von einem Token-Gerät (19, 1101);
ansprechend auf die Anforderung eines Zugriffs auf die Funktionalität, Erzeugen eines Anforderungssignals, das Integritätsdaten von der Überwachungskomponente (24) anfordert, durch das Token-Gerät (19, 1101), um die Integrität der Computerplattform zu bestätigen;
ansprechend auf die Anforderung nach Integritätsdaten, Berichten von Integritätsdaten an das Token-Gerät (19, 1101) durch die Überwachungskomponente (24), wobei die Integritätsdaten ein Ergebnis einer Überwachungsoperation beschreiben;
bei Empfang von zufriedenstellenden Integritätsdaten, Anbieten der Funktionalität durch das Token-Gerät (19, 1101); und
bei Empfang von nicht zufriedenstellenden Integritätsdaten, Verweigern der Funktionalität durch das Token-Gerät (19, 1101).

30. Ein Verfahren gemäß Anspruch 29, bei dem die Anforderung einer Funktionalität durch eine Anwendung vorgenommen wird, die auf der Rechenplattform läuft.

31. Ein Verfahren gemäß Anspruch 29 oder Anspruch 30, bei dem die Überwachungsoperation folgende Schritte aufweist:
die Überwachungskomponente (24) führt eine oder eine Mehrzahl von Datenüberprüfungen bei Komponenten der Rechenplattform (10) aus; und
die Überwachungskomponente (24) kann einen Satz von zertifizierten Referenzdaten zusammen mit den Datenüberprüfungen berichten.

32. Das Verfahren gemäß Anspruch 31, bei dem die zertifizierten Referenzdaten einen Satz von Metriken umfassen, die zu erwarten sind, wenn bestimmte Komponenten der Rechenplattform (10) gemessen werden, und Digital-Signatur-Daten umfassen, die eine Entität identifizieren, die die Referenzdaten zertifiziert.

33. Das Verfahren gemäß einem der Ansprüche 29 bis 33, das den Schritt eines Berichtens der Integritätsdaten durch ein Erzeugen einer visuellen Anzeige von Bestätigungsdaten aufweist.

34. Das Verfahren gemäß einem der Ansprüche 29 bis 33, das ferner den Schritt eines Hinzufügens von Digitale-Signatur-Daten zu den Integritätsdaten aufweist, wobei die Digitale-Signatur-Daten die Überwachungskomponente (24) identifizieren; und
Senden der Integritätsdaten und der Digitale-Signatur-Daten an das Token-Gerät (19, 1101).

35. Das Verfahren gemäß einem der Ansprüche 29 bis 34, bei dem die Überwachungskomponente (24) eine detaillierte Integritätsantwort an einen Dritteilnehmerserver (1102) sendet, falls dieselbe durch das Token-Gerät (19, 1101) in einer Integritätsabfrage aufgefordert wird.

36. Das Verfahren gemäß Anspruch 35, bei dem die Überwachungskomponente (24) eine detaillierte Integritätsantwort an das Token-Gerät (19, 1101) berichtet und das Token-Gerät (19, 1101) die Integritätsantwort an einen Dritteilnehmerserver (1102) sendet, falls dasselbe den Dritteilnehmerserver (1102) benötigt, um die detaillierte Integritätsantwort zu interpretieren.

37. Das Verfahren gemäß Anspruch 35 oder 36, bei dem ein Dritteilnehmerserver (1102) die Integritätsantwort zu einer Form vereinfacht, in der das Token-Gerät (19, 1101) die Integritätsantwort interpretieren kann.

38. Das Verfahren gemäß Anspruch 37, bei dem ein Dritteilnehmerserver (1102) eine vereinfachte Integritätsantwort an das Token-Gerät (19, 1101) sendet.

39. Das Verfahren gemäß Anspruch 38, das ferner folgende Schritte aufweist:
Hinzufügen von Digitale-Signatur-Daten zu einer vereinfachten Integritätsantwort, wobei die Digitale-Signatur-Daten einen Dritteilnehmerserver (1102) dem Token-Gerät (19, 1101) authentifizieren.

40. Ein Verfahren gemäß einem der Ansprüche 29 bis 39, das ferner den Schritt eines Programmierens des Token-Geräts (19, 1101) aufweist, um auf ein empfangenes Abrufsignal von der Rechenplattform anzusprechen;
wobei die Anforderung einer Funktionalität den Schritt eines Empfangens eines Abrufsignals von der Rechenplattform durch das Token-Gerät (19, 1101) aufweist; und
wobei das Token-Gerät (19, 1101) ansprechend auf das empfangene Abrufsignal die Anforderung nach Integritätsdaten durch die Überwachungskomponente (24) erzeugt.

41. Ein Verfahren gemäß Anspruch 40, bei dem das Abrufsignal von einem Anwendungsprogramm empfangen wird, das auf der Rechenplattform läuft.

42. Ein Verfahren gemäß einem der Ansprüche 29 bis 41, bei dem das Token-Gerät (19, 1101) eine Datenverarbeitungsfähigkeit aufweist und sich auf eine erwartete Weise verhält, physisch von der Rechenplattform (10) und der Überwachungskomponente (24) trennbar ist und eine Kryptographische-Daten-Verarbeitungsfähigkeit aufweist, wobei das Verfahren ferner folgenden Schritt aufweist:
Nachweisen der Identität derselben zu dem Token-Gerät (19, 1101) und Einrichten eines Berichts an das Token-Gerät (19, 1101) von zumindest einer Datenüberprüfung, die an der Rechenplattform (10) durchgeführt wird, durch die Überwachungskomponente (24).

43. Ein Verfahren gemäß einem der Ansprüche 29 bis 42, bei dem das Token-Gerät (19, 1101) eine Smartcard ist.

## Revendications

1. Un système d'appareil informatique qui comprend:
une plate-forme informatique (10) qui inclut un premier processeur (21) de données et un premier moyen d'enregistrement (22) de données; et
un dispositif (19, 1101) à jeton qui est physiquement distinct et séparable de ladite plate-forme informatique (10),
**caractérisé en ce que** ledit système comprend en outre:
un composant de surveillance (24) qui inclut un deuxième processeur (30) de données et un deuxième moyen d'enregistrement (3, 4) de données, dans lequel ledit composant de surveillance (24) est configuré de manière à exécuter une série de contrôles de données sur ladite plate-forme informatique (10) et dans lequel le dispositif à jeton est aussi physiquement distinct et séparable dudit composant de surveillance; et
dans lequel, dans un mode d'opération, ledit dispositif (19, 1101) à jeton intervient pour effectuer une interrogation d'intégrité audit composant de surveillance (24) et ledit dispositif (19, 1101) à jeton n'entreprend aucune des interventions spécifiques dont il est capable, à moins qu'il ne reçoive une réponse satisfaisante à ladite interrogation d'intégrité.

2. Le système selon la revendication 1, dans lequel ledit dispositif (19, 1101) à jeton reçoit une réponse détaillée à ladite interrogation d'intégrité et traite ladite réponse d'intégrité pour interpréter ladite réponse d'intégrité.

3. Le système selon la revendication 1, qui comprend en outre un serveur (1102) de tierce partie, dans lequel une réponse à ladite interrogation d'intégrité est envoyée audit serveur (1102) de tierce partie.

4. Le système selon la revendication 3, dans lequel ledit composant de surveillance (24) envoie une réponse détaillée d'intégrité au serveur (1102) de tierce partie.

5. Le système selon la revendication 4, dans lequel ledit composant de surveillance (24) envoie une réponse détaillée d'intégrité à un serveur (1102) de tierce partie si ceci lui est demandé dans ladite interrogation d'intégrité.

6. Le système selon la revendication 4, dans lequel ledit composant de surveillance (24) rend compte d'une réponse détaillée d'intégrité audit dispositif (19, 1101) à jeton, et ledit dispositif (19, 1101) à jeton envoie ladite réponse d'intégrité audit serveur (1102) de tierce partie s'il demande au serveur (1102) de tierce partie de l'aider à interpréter ladite réponse détaillée d'intégrité.

7. Le système selon l'une quelconque des revendications 4 à 6, dans lequel un serveur (1102) de tierce partie simplifie ladite réponse d'intégrité à une forme dans laquelle ledit dispositif (19, 1101) à jeton peut interpréter ladite réponse d'intégrité.

8. Le système selon la revendication 7, dans lequel un serveur (1102) de tierce partie envoie une réponse simplifiée d'intégrité audit dispositif (19, 1101) à jeton.

9. Le système selon la revendication 8, qui intervient pour ajouter des données de signature numérique à ladite réponse simplifiée d'intégrité, ladite signature numérique authentifiant ledit serveur (1102) de tierce partie audit dispositif (19, 1101) à jeton.

10. Le système selon l'une quelconque des revendications précédentes, dans lequel il est demandé audit dispositif (19, 1101) à jeton d'effectuer une intervention.

11. Le système selon l'une quelconque des revendications précédentes dans lequel ledit dispositif (19, 1101) à jeton demande d'effectuer une intervention.

12. Le système selon l'une quelconque des revendications précédentes dans lequel ledit dispositif (19, 1101) à jeton envoie des données d'image à ladite plate-forme informatique si une dite réponse satisfaisante à ladite interrogation d'intégrité est reçue, et ladite plate-forme informatique affiche lesdites données d'image.

13. Le système selon l'une quelconque des revendications précédentes, dans lequel ledit composant de surveillance (24) peut établir une identité de lui-même.

14. Le système selon l'une quelconque des revendications précédentes, qui comprend en outre un moyen d'interface pour établir une interface entre ledit composant de surveillance (24) et ledit dispositif (19, 1101) à jeton.

15. Le système selon l'une quelconque des revendications précédentes, dans lequel ledit système d'appareil informatique est configuré d'une manière telle que ledit composant de surveillance (24) rend compte desdits contrôles de données audit dispositif (19, 1101) à jeton, lesdits contrôles de données contenant des données décrivant un état de ladite plate-forme informatique.

16. Le système selon l'une quelconque des revendications précédentes, dans lequel une dite intervention spécifique comprend une autorisation à ladite plate-forme informatique (10) d'entreprendre une transaction pour compte d'un utilisateur du système.

17. Le système selon l'une quelconque des revendications précédentes, dans lequel une dite intervention spécifique comprend un envoi de données de vérification à ladite plate-forme informatique, lesdites données de vérification vérifiant le fonctionnement correct de ladite plate-forme informatique; à la suite de quoi ladite plate-forme informatique est apte à afficher lesdites données de vérification sur un écran d'affichage usuel.

18. Le système selon l'une quelconque des revendications précédentes, dans lequel le dispositif (19, 1101) à jeton est une carte intelligente.

19. Le système selon l'une quelconque des revendications précédentes, dans lequel le système informatique comprend en outre:
un moyen d'interface pour des communications entre la plate-forme informatique (10) et ledit dispositif (19, 1101) à jeton, ledit moyen d'interface communiquant avec ledit composant (24) de surveillance, et ledit système informatique étant configuré d'une manière telle que ledit composant de surveillance (24) rend compte desdits contrôles de données audit dispositif (19, 1101) à jeton, lesdits contrôles de dos contenant des données décrivant un état de ladite plate-forme informatique.

20. Le système selon la revendication 19, dans lequel ledit composant de surveillance (24) est activé, lors d'une communication entre ledit dispositif (19, 1101) à jeton et ledit moyen d'interface, pour exécuter sur ladite plate-forme informatique une opération de surveillance dans laquelle ledit composant de surveillance (24) obtient des données décrivant un état de fonctionnement de ladite plate-forme informatique.

21. Le système selon la revendication 19 ou la revendication 20, dans lequel ledit moyen d'interface réside sensiblement complètement à l'intérieur dudit composant de surveillance (24).

22. Le système selon la revendication 19 ou la revendication 20, dans lequel ledit moyen d'interface comprend ladite plate-forme informatique.

23. Le système selon l'une quelconque des revendications 19 à 22, dans lequel ledit moyen d'interface comprend un lecteur de carte intelligente.

24. Le système selon l'une quelconque des revendications 19 à 23, dans lequel ledit moyen d'interface comprend une pile PCSC conforme à la spécification PC/SC 1.0. du groupe de travail de PCSC.

25. Le système selon l'une quelconque des revendications 19 à 24, dans lequel ledit composant de surveillance (24) comprend un moyen de vérification configuré pour obtenir des données de certification qui certifient indépendamment lesdites données d'état et pour fournir lesdites données de certification audit moyen d'interface.

26. Le système selon l'une quelconque des revendications 19 à 25, dans lequel ledit moyen d'interface est configuré pour envoyer et recevoir des données selon un protocole pro-actif.

27. Un dispositif à jeton qui comprend un processeur de données et un dispositif de mémoire, ledit dispositif (19, 1101) à jeton étant configuré pour permettre d'exécuter au moins une fonction de traitement de données ou de signalisation;
**caractérisé en ce que** ledit dispositif (19, 1101) à jeton intervient pour:
recevoir d'un élément d'un système informatique une demande d'exécution de ladite fonction unique au moins de traitement de données ou de signalisation;
engendrer une demande de données d'intégrité envoyée audit composant de surveillance (24) dudit système informatique afin de confirmer l'intégrité du système informatique;
recevoir du composant de surveillance les données d'intégrité;
si lesdites données d'intégrité fournies audit dispositif (19, 1101) à jeton sont satisfaisantes, ledit dispositif (19, 1101) à jeton permet une dite fonction; et
si lesdites données d'intégrité reçues par ledit dispositif (19, 1101) à jeton ne sont pas satisfaisantes, ledit dispositif (19, 1101) à jeton refuse ladite fonction.

28. Le dispositif à jeton selon la revendication 27, ce dispositif à jeton étant configuré de manière à pouvoir répondre à un signal d'interrogation intervenant conformément à la spécification PC/SC 1.0., ou PC/SC spécification 1.0. selon l'intitulé anglo-saxon, ledit dispositif (19, 1101) à jeton pouvant lancer une instruction à traiter par une pile de logiciel sur l'entité informatique, en réponse audit signal d'interrogation conforme à un protocole pro-actif.

29. Un procédé d'obtention d'une vérification d'un état d'une entité informatique, ladite entité informatique comprenant une plate-forme informatique et un composant de surveillance (24), ledit procédé comprenant les étapes consistant à:
demander à un dispositif (19, 1101) à jeton un accès à une fonctionnalité;
faire engendrer par ledit dispositif (19, 1101) à jeton, en réponse à ladite demande d'accès à une fonctionnalité, un signal de demande qui demande des données de vérification audit composant de surveillance (24);
amener ledit composant de surveillance (24) à rendre compte desdites données d'intégrité audit dispositif (19, 1101) à jeton en réponse à ladite demande de confirmer l'intégrité desdites données d'intégrité de la plate-forme informatique, lesdites données d'intégrité décrivant un résultat d'une opération de surveillance;
amener ledit dispositif (19, 1101) à jeton à offrir ladite fonctionnalité à réception de dites données d'intégrité satisfaisantes; et
amener ledit dispositif (19, 1101) à jeton à dénier ladite fonctionnalité à réception de dites données d'intégrité non satisfaisantes.

30. Un procédé selon la revendication 29, dans lequel ladite demande de fonctionnalité est effectuée par une application en cours d'exécution sur ladite plate-forme informatique.

31. Un procédé selon la revendication 29 ou la revendication 30, dans lequel ladite opération de surveillance comprend, pour ledit composant de surveillance (24), les étapes consistant à:
par ledit composant de surveillance (24) exécuter un ou plusieurs contrôles de données sur des composants de ladite plate-forme informatique (10); et
par ledit composant de surveillance (24) pouvoir rendre compte d'un jeu de données certifiées de référence, qui accompagne lesdits contrôles de données.

32. Le procédé selon la revendication 31, dans lequel lesdites données de référence certifiées incluent un jeu de métrologie à attendre lors de mesures de composants particuliers de ladite plate-forme informatique (10), et inclut des données de signature numérique qui identifient une entité qui certifie lesdites données de référence.

33. Le procédé selon l'une quelconque des revendications 29 à 32, qui comprend l'étape consistant à rendre compte desdites données d'intégrité en engendrant un affichage visuel de données de confirmation.

34. Le procédé selon l'une quelconque des revendications 29 à 33, qui comprend en outre l'étape consistant à ajouter des données de signature numérique auxdites données d'intégrité, lesdites données de signature numérique identifiant ledit composant de surveillance (24); et
transmettre audit dispositif (19, 1101) a jeton lesdites données d'intégrité et lesdites données de signature numérique.

35. Le procédé selon l'une quelconque des revendications 29 à 34, dans lequel ledit composant de surveillance (24) envoie une réponse détaillée d'intégrité à un serveur (1102) de tierce partie si ceci lui est demandé par une interrogation d'intégrité provenant du dispositif (19, 1101) à jeton.

36. Le procédé selon la revendication 35, dans lequel ledit composant de surveillance (24) rend compte d'une réponse détaillée d'intégrité audit dispositif (19, 1101) à jeton et ledit dispositif (19, 1101) à jeton envoie ladite réponse d'intégrité à un serveur (1102) de tierce partie s'il demande au serveur (1102) de tierce partie de l'aider à interpréter ladite réponse détaillée d'intégrité.

37. Le procédé selon la revendication 35 ou la revendication 36, dans lequel un serveur (1102) de tierce partie simplifie ladite réponse d'intégrité à une forme dans laquelle ledit dispositif (19, 1101) àjeton peut interpréter ladite réponse d'intégrité.

38. Le procédé selon la revendication 37, dans lequel un serveur (1102) de tierce partie envoie une réponse simplifiée d'intégrité audit dispositif (19, 1101) à jeton.

39. Le procédé selon la revendication 38, qui comprend en outre l'étape consistant à:
ajouter des données de signature numérique à une réponse simplifiée d'intégrité, ladite signature numérique authentifiant ledit serveur (1102) de tierce partie audit dispositif (19, 1101) à jeton.

40. Un procédé selon l'une quelconque des revendications 29 à 39, qui comprend en outre l'étape consistant à programmer ledit dispositif (19, 1101) à jeton pour répondre à un signal d'interrogation reçu de ladite plate-forme informatique;
ladite demande de fonctionnalité comprenant une réception, par ledit dispositif (19, 1101) à jeton, d'un signal d'interrogation de ladite plate-forme informatique; et
ledit dispositif (19, 1101) engendrant, en réponse audit signal d'interrogation reçu, ladite demande de données d'intégrité par ledit composant de surveillance (24).

41. Un procédé selon la revendication 40, dans lequel ledit signal d'interrogation est reçu d'un programme d'application en cours d'exécution sur ladite plate-forme informatique.

42. Un procédé selon l'une quelconque des revendications 29 à 41, dans lequel ledit dispositif (19, 1101) à jeton possède une capacité de traitement de données et se comporte d'une manière attendue, est séparable physiquement de ladite plate-forme informatique (10) et dudit composant de surveillance (24), et possède une capacité de traitement de chiffrage de données, ledit procédé comprenant en outre l'étape consistant, pour ledit composant de surveillance (24), à:
par ledit composant de surveillance (24) prouver son identité audit dispositif (19, 1101) à jeton et établir un compte-rendu audit dispositif (19, 1101) à jeton d'au moins un contrôle de données exécuté sur ladite plate-forme informatique (10).

43. Un procédé selon l'une quelconque des revendications 29 à 32, dans lequel le dispositif (19, 1101) à jeton est une carte intelligente.
